# EUROPEAN PATENT SPECIFICATION

(11) **EP 3 737 177 B1**
(45) Date of publication and mention of the grant of the patent: **20.12.2023**
(21) Application number: 18898038.7
(22) Date of filing: 05.01.2018
(51) Int. Cl.: H04W 72/04, H04L 1/00, H04L 5/00

(54) **TERMINAL, BASE STATION AND WIRELESS COMMUNICATION METHOD**
ENDGERÄT, DRAHTLOSE BASISSTATION UND DRAHTLOSKOMMUNIKATIONSVERFAHREN
TERMINAL, STATION DE BASE ET PROCÉDÉ DE COMMUNICATION SANS FIL

(43) Date of publication of application: 11.11.2020
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); GUO, Shaozhen, Beijing 100190 (CN); HOU, Xiaolin, Beijing 100190 (CN)
(74) Representative: Hoffmann Eitle
(86) International application number: PCT/JP2018/000111
(87) International publication number: WO 2019/135285

(56) References cited:
- US-A1- 2013 195 041
- US-A1- 2016 014 751
- US-A1- 2016 249 250
- LG ELECTRONICS: "Issue on handling of search space collision in case of cross-carrier scheduling", 3GPP DRAFT; R1-102411 LTEA_PDCCH SS HANDLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Beijing, china; 20100412, 6 April 2010 (2010-04-06), XP050419625, [retrieved on 2010-04-06]
- NTT DOCOMO; INC: "DCI contents and formats", 3GPP TSG-RAN WG1#91 R1-1720814, 1 December 2017 (2017-12-01), pages 1-3, XP051370243, Retrieved from the Internet: URL:http://www.3gpp.org/ftp/tsg_ran/WG1_RL 1/TSGR1_91/Docs/R1-1720814.zip
- SAMSUNG: "DCI Contents and Formats", 3GPP TSG-RAN WG1#91 R1-1720322, 1 December 2017 (2017-12-01), pages 1-4, XP051369911, Retrieved from the Internet: URL:http://www.3gpp.org/ftp/tsg_ran/WG1_RL 1/TSGR1-91/Docs/Rl-1720322.zip

## Description

### Technical Field

The present invention relates to a terminal, a radio communication method and a base station of a next-generation mobile communication system.

### Background Art

In Universal Mobile Telecommunications System (UMTS) networks, for the purpose of higher data rates, lower latency, etc., Long Term Evolution (LTE) has been specified (Non-Patent Literature 1). Furthermore, for the purpose of wider bands and a higher speed than those of LTE, LTE successor systems (also referred to as, for example, LTE Advanced (LTE-A), Future Radio Access (FRA), 4G, 5G, 5G+ (plus), New RAT (NR), and LTE Rel. 14 and 15~) have been also studied.

In legacy LTE systems (e.g., LTE Rel. 8 to 13), a user terminal (UE: User Equipment) controls reception of a downlink shared channel (e.g., a PDSCH: Physical Downlink Shared Channel) based on Downlink Control Information (also referred to as, for example, DCI or a DL assignment) from a radio base station. Furthermore, the user terminal controls transmission of an uplink shared channel (e.g., PUSCH: Physical Uplink Shared Channel) based on DCI (also referred to as, for example, a UL grant).

Furthermore, the legacy LTE systems specify formats of a plurality of different pieces of DCI (DCI Formats (DFs) such as DCI formats 0 and 4 used to schedule a PUSCH, and DCI formats 1, 1A to 1D, 2 and 2Ato 2D used to schedule a PDSCH) according to uses.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010.

LG ELECTRONICS: "Issue on handling of search space collision in case of cross-carrier scheduling"
Patent Literature relates to collision between common and UE-specific search spaces in case of cross-CC scheduling.

US 2016/249250 A1 relates to a method and a device for cancelling interference of a terminal in a wireless communication system. More specifically, the method comprises the steps of: receiving information on N subbands of a neighboring cell; decoding an interference signal of the neighbor cell on the basis of the information on subbands of the neighbor cell; and cancelling the interference caused by the neighbor cell from a signal which is received from a serving cell, on the basis of the decoded interference signal, wherein the information on the subbands indicates a transmission mode TM of the neighbor cell.

US 2013/195041 A1 relates to a methods for transmitting and receiving signaling. The DCI formats scheduling a transmission of a PUSCH or a reception of a PDSCH are designed and have a smaller size than respective DCI formats for conventional UEs. DCI formats scheduling PUSCHs to or PDSCHs for a group of MTC UEs are also designed and can have a same size as DCI formats scheduling PUSCH or PDSCH for an individual MTC UE.

### Summary of Invention

### Technical Problem

In legacy LTE systems (e.g., LTE Rel. 8 to 13), a user terminal identifies a plurality of DCI formats whose payloads are identical and whose identifiers (scramble identifiers such as RNTIs: Radio Network Temporary Identifiers) used to scramble (mask) Cyclic Redundancy Check (CRC) bits by using an identifier (also referred to as, for example, a flag for identification, an identification flag, a field for identification or an identifier field) included in each of a plurality of these DCI formats.

On the other hand, the user terminal can identify a plurality of DCI formats when one of the payloads and the scramble identifiers are different. Hence, it is assumed for a future radio communication system (e.g., NR, 5G, 5G+ or Rel. 15 or subsequent releases) that uses a plurality of DCI formats different from those of the above legacy LTE systems that, even if the above identifier fields are not provided in a plurality of these DCI formats, a plurality of these DCI formats can be identified. Alternatively, it is assumed that the above identifier fields can be used for other uses other than identification of a DCI format.

The present invention has been made in light of this point, and one of objects of the present invention is to provide a user terminal and a radio communication method that can control communication processing by using DCI formats that are suitable to future radio communication systems.

### Solution to Problem

The object of the invention is achieved by the subject-matter of the independent claims. Advantageous embodiments are defined in the dependent claims. Further examples are provided for facilitating the understanding of the invention.
One aspect of a user terminal according to the present disclosure includes: a receiving section that receives a plurality of pieces of Downlink Control Information (DCI) whose payloads are identical and whose identifiers used to scramble a cyclic redundancy check bit are identical; and a control section that controls communication processing based on an identifier field value included in each of the plurality of pieces of DCI, the communication processing being based on each of the plurality of pieces of DCI.

### Advantageous Effects of Invention

According to the present invention, it is possible to control communication processing by using DCI formats that are suitable to future radio communication systems.

### Brief Description of Drawings

Figs. 1A and 1B are diagrams illustrating one example of identifier fields according to a first aspect.
Figs. 2A and 2B are diagrams illustrating one example of identifier fields according to a second aspect.
Figs. 3A and 3B are diagrams illustrating another example of identifier fields according to the second aspect.
Fig. 4 is a diagram illustrating one example of slot formats according to a third aspect.
Figs. 5A to 5C are diagrams illustrating one example of a DCI format 2_0 according to a third aspect.
Figs. 6A to 6C are diagrams illustrating one example of a DCI format 2_1 according to a fourth aspect.
Figs. 7A to 7C are diagrams illustrating one example of a DCI format 2_2 according to a fifth aspect.
Fig. 8 is a diagram illustrating another example of a DCI format 2_2 according to the fifth aspect.
Figs. 9A to 9C are diagrams illustrating one example of a DCI format 2_3 according to a sixth aspect.
Fig. 10 is a diagram illustrating one example of a schematic configuration of a radio communication system according to the present embodiment.
Fig. 11 is a diagram illustrating one example of an overall configuration of a radio base station according to the present embodiment.
Fig. 12 is a diagram illustrating one example of a function configuration of the radio base station according to the present embodiment.
Fig. 13 is a diagram illustrating one example of an overall configuration of a user terminal according to the present embodiment.
Fig. 14 is a diagram illustrating one example of a function configuration of the user terminal according to the present embodiment.
Fig. 15 is a diagram illustrating one example of hardware configurations of the radio base station and the user terminal according to the present embodiment.

### Description of Embodiments

It is assumed for future radio communication systems (e.g., LTE Rel. 15~, 5G and NR) to use a plurality of DCI formats different from those of legacy LTE systems (e.g., LTE Rel. 8 to 13) to control communication processing of a user terminal (e.g., at least one of reception of a downlink shared channel (e.g., PDSCH), transmission of an uplink shared channel (e.g., PUSCH), a slot format, transmission power of the uplink shared channel and an uplink control channel (e.g., Physical Uplink Control Channel (PUCCH)), and transmission of an uplink reference signal (e.g., Sounding Reference Signal (SRS)).

For example, following (1) to (3) DCI formats whose at least one of uses, payloads (the numbers of bits), and types and the numbers of included information fields are different have been studied for the future radio communication systems.

(1) A DCI format (also referred to as, for example, a DCI format 0) used to schedule a PUSCH
   (1.1) DCI formats (also referred to as, for example, a DCI format 0_0 and a DCI format 0A) used to schedule a PUSCH of one cell.
   (1.2) DCI formats (also referred to as, for example, a DCI format 0_1 and a DCI format 0B) that are used to schedule the PUSCH of one cell and whose payloads (the numbers of bits) are larger than that of the DCI format 0_0.
(2) A DCI format (also referred to as, for example, a DCI format 1) used to schedule a PDSCH
   (2.1) DCI formats (also referred to as, for example, a DCI format 1_0 and a DCI format 1A) used to schedule a PUSCH of one cell.
   (2.2) DCI formats (also referred to as, for example, a DCI format 1_1 and a DCI format 1B) that are used to schedule the PDSCH of one cell and whose payloads (the numbers of bits) are larger than that of the DCI format 1_0.
(3) DCI formats used for other purposes
   (3.1) DCI formats (also referred to as, for example, a DCI format 2_0 and a DCI format 2A) used to notify information related to a slot format (e.g., SFI: Slot Format Indicator).
   (3.2) DCI formats (also referred to as, for example, a DCI format 2_1 and a DCI format 2B) used to notify a specific resource (e.g., a resource in which a PDSCH is assumed not to be transmitted to a user terminal, or a resource in which transmission of a PUSCH from the user terminal is stopped). In addition, the resource may include at least one of a frequency domain resource (e.g., one or more Physical Resource Blocks (PRBs)), and a time domain resource (e.g., one or more symbols).
   (3.3) DCI formats (also referred to as, for example, a DCI format 2_2 and a DCI format 2C) used to transmit a Transmission Power Control (TPC) command for at least one of a PUCCH and a PUSCH.
   (3.4) DCI formats (also referred to as, for example, a DCI format 2_3 and a DCI format 2D) used to transmit reference signals (e.g., Sounding Reference Signals (SRSs)) from one or more user terminals. For example, the DCI format may indicate a group (set) of TPC commands for the SRS.

The above future radio communication systems monitor search spaces that are downlink control channel (e.g., PDCCH: Physical Downlink Control Channel) candidate resources, and detect Downlink Control Information (DCI) for the user terminal. In this regard, monitor refers to, for example, decoding (blind-decoding) a search space based on each assumed format (e.g., each DCI format described in above (1) to (3)).

Similar to legacy LTE systems, it has been also studied that each of these DCI formats includes a field for identification of the DCI format (also referred to as, for example, an identifier, an identifier field, a flag or an identification flag).

However, it is assumed for the future radio communication system (e.g., NR, 5G, 5G+ or Rel. 15 or subsequent releases) that uses a plurality of DCI formats different from those of the above legacy LTE systems that it is possible to identify a plurality of these DCI formats without providing the above identifier fields in a plurality of these DCI formats. Alternatively, it is assumed that the above identifier field can be used for other uses other than identification of the DCI formats.

Hence, the inventors of the present invention have studied a method that makes it possible to control the above communication processing by using DCI formats that are suitable to the future radio communication systems (e.g., LTE Rel. 15∼, 5G and NR), and reached the present invention. More specifically, the inventors of the present invention have conceived improving performance by effectively using an identifier field in a DCI format, or reducing an overhead by deleting the identifier field.

The present embodiment will be described in detail below. The above DCI formats 0_0, 0_1, 1_0, 1_1, 2_0, 2_1, 2_2 and 2_3 will be exemplified below. However, names of the DCI formats according to the present embodiment are not limited to these, and are applicable to DCI formats of other names as long as the DCI formats have identical or similar uses.

Furthermore, 1-bit identifier field will be exemplified below. However, the number of bits of the identifier field may be 2 bits or more. Furthermore, the name of the identifier field is not limited to this, and may be any name as long as the identifier field is a field in the DCI format. Furthermore, the following drawings will exemplify an identifier field provided at a head of the DCI format. However, a position of the identifier field may be any position in the DCI format.

### (First Aspect)

The first aspect will describe a case where identifier fields in DCI formats (that will be also referred to as UL grants and are, for example, DCI formats 0_0 and 0_1) used to schedule a PUSCH, and identifier fields in DCI formats (that will be also referred to as DL assignments and are, for example, DCI formats 1_0 and 1_1) used to schedule a PDSCH are used to distinguish (or identify) a DCI format.

More specifically, identifier fields in the UL grant and the DL assignment whose payloads are identical, whose scramble identifiers (e.g., RNTIs) of CRC bits are identical and whose resources overlap (or that cannot be distinguished based on at least one of these payloads, scramble identifiers and resources) may be used to identify the UL grant or the DL assignment.

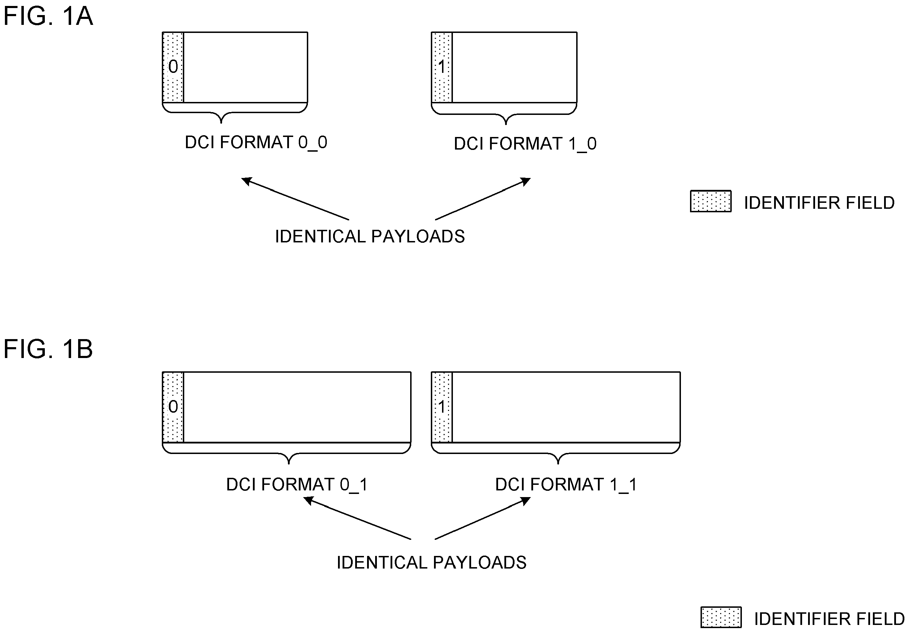

Fig. 1 is a diagram illustrating one example of identifier fields according to the first aspect. Figs. 1A and 1B assume that the DCI formats 0_0 and 0_1 used to schedule a PUSCH, and DCI formats 1_0 and 1_1 used to schedule a PDSCH are respectively scrambled (masked) by using an identical scramble identifier (e.g., C-RNTI: Cell-RNTI).

Fig. 1A illustrates an example where payloads of the DCI formats 0_0 and 1_0 are identical. As illustrated in Fig. 1A, a value (e.g., "0") indicating the DCI format 0_0 is set to an identifier field in the DCI format 0_0, and a value (e.g., "1") indicating the DCI format 1_0 is set to an identifier field in the DCI format 1_0.

Fig. 1B illustrates an example where payloads of the DCI formats 0_1 and 1_1 are identical. As illustrated in Fig. 1B, a value (e.g., "0") indicating the DCI format 0_1 is set to an identifier field in the DCI format 0_1, and a value (e.g., "1") indicating the DCI format 1_1 is set to an identifier field in the DCI format 1_1.

Values of the identifier fields (that are identifier field values and will be also referred to simply as identifiers) illustrated in Figs. 1A and 1B are exemplary, and are not limited to these. A DCI format indicated by a identifier field value may be fixed (defined in advance by a specification), or may be configured by a higher layer signaling.

In addition, the higher layer signaling only needs to be, for example, at least one of a Radio Resource Control (RRC) signaling, broadcast information (e.g., MIB: Master Information Block), and system information (e.g., an SIB: System Information Block and RMSI: Remaining Minimum System Information).

According to the first aspect, identifier fields in a plurality of given DCI formats are used to identify a plurality of these DCI formats. Consequently, even when a plurality of DCI formats have identical payloads and identical scramble identifiers, the user terminal can appropriately identify a plurality of these DCI formats based on the identifier field values.

### (Second Aspect)

It is assumed that one or more partial frequency bands (also referred to as, for example, Bandwidth Parts (BWPs) or partial bands) are configured in a carrier. One or more Downlink (DL) communication BWPs (DL BWPs) and/or one or more Uplink (UL) communication BWPs (UL BWPs) may be configured to a user terminal. A plurality of BWPs configured in the carrier may have identical bandwidths and/or different bandwidths.

It is assumed that, when one or more BWPs are configured in the carrier, a payload of a DCI format is controlled per bandwidth of a BWP DCI formats (e.g., DCI formats 0_0 and 0_1) used to schedule a PUSCH, and DCI formats (e.g., DCI format 1_0 and 1_1) used to schedule a PDSCH respectively include fields (e.g., frequency domain resource assignment fields) defined based on the bandwidths of the BWPs. Similarly, the number of Multiple-Input and Multiple-Output (MIMO) layers and whether or not code-block based re-transmission is configured also influence payloads of the DCI formats.

Therefore, there is a risk that payloads do not become identical in a combination of a given UL grant and DL assignment (e.g., the DCI formats 0_0 and 1_0 and the DCI formats 0_1 and 1_1) described in the first aspect.

Hence, according to the second aspect, a plurality of arbitrary DCI formats whose payloads are identical and whose scramble identifiers (e.g., RNTIs) are identical may be selected, and identifier fields in a plurality of these DCI formats may be used to identify a plurality of these DCI formats. Differences from the first aspect will be mainly described below.

According to the second aspect, the user terminal may assume identifier field values of a plurality of DCI formats whose payloads are identical and whose scramble identifiers are identical according to a given rule. For example, a given order (e.g., DF 0_0 -> DF 0_1 -> DF 1_0 -> DF 1_1) is defined for a plurality of DCI formats, and values based on the order may be set to the identifier fields in a plurality of DCI formats whose payloads are identical. The user terminal identifies a plurality of arbitrary DCI formats whose payloads are identical and whose scramble identifiers are identical based on the identifier field values.

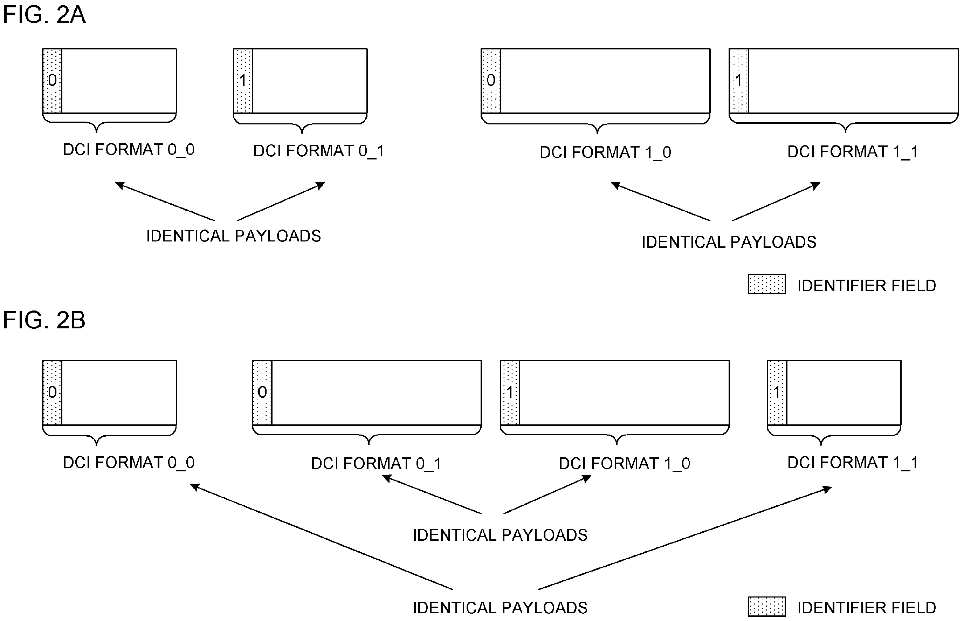

Fig. 2 is a diagram illustrating one example of identifier fields according to the second aspect. Figs. 2A and 2B assume that a CRC bit added to each DCI format by using an identical scramble identifier (e.g., C-RNTI) is scrambled (masked) for each of the DCI formats 0_0 and 0_1 and the DCI formats 1_0 and 1_1.

Furthermore, Figs. 2A and 2B illustrate examples where an order of DF 0_0 -> DF 0_1 -> DF 1_0 -> DF 1_1 is defined for a plurality of DCI Formats (DFs) that are scrambled by the identical scramble identifier. However, the order is not limited to this.

Furthermore, in Figs. 2A and 2B, the user terminal assumes that identifier field values of two DCI formats whose payloads are identical among a plurality of these DCI formats have smaller values as the order of DCI formats comes earlier, yet is not limited to this. The user terminal only needs to assume the identifier field values according to a given rule.

Fig. 2A illustrates an example where payloads of the DCI formats 0_0 and 0_1 are identical and payloads of the DCI format 1_0 and the DCI format 1_1 are identical. As illustrated in Fig. 2A, the values based on the above order are respectively set to the identifier fields in the DCI formats 0_0 and 0_1 whose payloads are identical. Similarly, the values based on the above order are respectively set to the identifier fields in the DCI formats 1_0 and 1_1 whose payloads are identical.

For example, according to the above order, the DCI format 0_0 comes earlier than the DCI format 0_1 (the DCI format 0_0 is on the left and the DCI format 0_1 is on the right in Fig. 2A). Therefore, in Fig. 2A, the user terminal may assume the identifier field value of the DCI format 0_0 as "0", and assume the identifier field value of the DCI format 0_1 as "1".

Furthermore, according to the above order, the DCI format 1_0 comes earlier than the DCI format 1_1 (the DCI format 1_0 is on the left and the DCI format 1_1 is on the right in Fig. 2A). Therefore, in Fig. 2A, the user terminal may assume the identifier field value of the DCI format 1_0 as "0", and assume the identifier field value of the DCI format 1_1 as "1".

Fig. 2B illustrates an example where payloads of the DCI formats 0_0 and 1_1 are identical and payloads of the DCI format 0_1 and the DCI format 1_0 are identical. As illustrated in Fig. 2B, the values based on the above order are respectively set to the identifier fields in the DCI formats 0_0 and 1_1 whose payloads are identical. Similarly, the values based on the above order are respectively set to the identifier fields in the DCI formats 0_1 and 1_0 whose payloads are identical.

For example, according to the above order, the DCI format 0_0 comes earlier than the DCI format 1_1 (the DCI format 0_0 is on the left and the DCI format 1_1 is on the right in Fig. 2B). Therefore, in Fig. 2B, the user terminal may assume the identifier field value of the DCI format 0_0 as "0", and assume the identifier field value of the DCI format 1_1 as "1".

Furthermore, according to the above order, the DCI format 0_1 comes earlier than the DCI format 1_0 (the DCI format 0_1 is on the left and the DCI format 1_0 is on the right in Fig. 2B). Therefore, in Fig. 2B, the user terminal may assume the identifier field value of the DCI format 0_1 as "0", and assume the identifier field value of the DCI format 1_0 as "1".

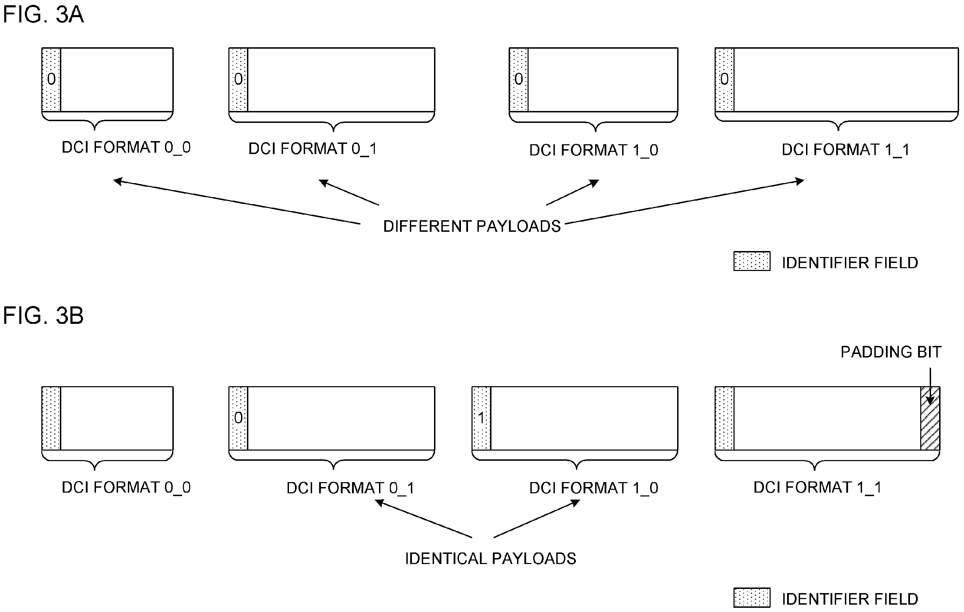

Fig. 3 is a diagram illustrating another example of identifier fields according to the second aspect. Differences of Figs. 3A and 3B from Figs. 2A and 2B will be mainly described. In Fig. 3A, respective payloads of a plurality of DCI formats to which CRC bits scrambled by an identical scramble identifier (e.g., C-RNTI) are added are different. Therefore, the user terminal can identify a plurality of these DCI formats without using identifier field values.

Hence, when there are not a plurality of a plurality of DCI formats to which CRC bits scrambled by the identical scramble identifier (e.g., RNTI) are added and whose payloads are identical as illustrated in Fig. 3A, the user terminal may assume that the identifier field values in a plurality of these DCI formats are fixed values (e.g., "0" or "1").

By setting the fixed values (identical values) to the identifier field values in a plurality of these DCI formats as illustrated in Fig. 3A, it is possible to use the identifier fields as virtual CRC bits. The virtual CRC bit is a known bit value included in a payload of each DCI format, and will be also referred to as, for example, a bit for pruning.

Generally, when a known bit value increases more, a greater error correction effect in the user terminal can be obtained. Hence, by using the identifier fields as the virtual CRC bits as illustrated in Fig. 3A, it is possible to improve performance of a radio communication system.

Fig. 3B illustrates a case where there are 3 or more DCI formats to which CRC bits scrambled by an identical scramble identifier (e.g., RNTI) are added, and whose payloads are identical. 1-bit identifier field does not make it possible to identify only two DCI formats. Hence, a given number of padding bits may be added (included) to third and subsequent DCI formats whose payloads are identical to make only payloads of the two DCI formats identical. Alternatively, the identifier fields may be 2 bits or more.

In, for example, Fig. 3B, payloads of the DCI formats 0_1 and 1_0, and the DCI format 1_1 to which a padding bit is not yet added (included) are identical. Hence, the padding bit may be added (included) to the DCI format 1_1 to differ the payload of the DCI format 1_1 from those of the DCI formats 0_1 and 1_1. In addition, DCI formats to which padding bits are added (included) are not limited to the DCI format 1_1, and may be determined according to the given rule.

According to the second aspect, the identifier fields in a plurality of arbitrary DCI formats to which CRC bits scrambled by using an identical scramble identifier are added and whose payloads are identical are used to identify a plurality of these DCI formats. Consequently, even when the payloads of a plurality of arbitrary DCI formats are identical, the user terminal can appropriately identify a plurality of these DCI formats based on the identifier field values.

### (Third Aspect)

The third aspect will describe a DCI format (e.g., DCI format 2_0) used to notify information (slot format information) related to a slot format.

The slot format information may include an identifier (e.g., Slot Format Indicator (SFI)) indicating a type (category) of each symbol (e.g., OFDM symbol) in a slot. The type of each symbol indicated by the SFI may be defined based on a transmission direction of each symbol, or may include, for example, Downlink (also expressed as "D"), Uplink (also expressed as "U") or flexible (also expressed as "X") that may be either downlink or uplink.

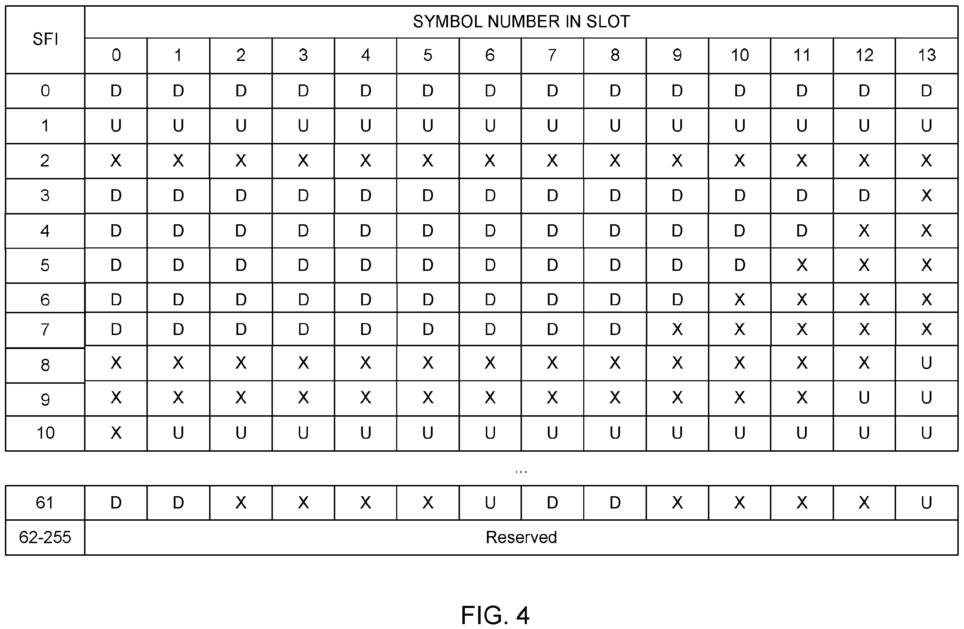

Fig. 4 is a diagram illustrating one example of slot formats according to the third aspect. In Fig. 4, when 1 slot includes 14 symbols, which one of types of "D", "U" and "X" each symbol in the slot is is indicated by an SFI. As illustrated in, for example, Fig. 4, given number of types (62 types in this case) of slot formats may be used.

ADCI format (e.g., DCI format 2_0) used to notify slot format information may include N (N ≥ 1) SFIs. A size (also referred to as, for example, a payload or the number of bits) of the DCI format may be configured by a higher layer signaling.

Each SFI in the DCI format may indicate a slot format associated with at least one of a Component Carrier (CC) (also referred to as, for example, a carrier, a cell or a serving cell), a BWP and a user terminal. Furthermore, the number of SFIs (N) in the DCI format may be indicated by a higher layer signaling. A configuration of the SFI (SFI configuration) may differ according to which (e.g., at least one combination of the CC, the BWP and the user terminal) each SFI is associated with.

Furthermore, the number of bits of each field for the SFI (each SFI field) in the DCI format may be indicated by a higher layer signaling. When the number of bits is restricted smaller than a given value (e.g., 6 bits), the slot format that can be indicated by each SFI field may be restricted smaller than those of the 62 types illustrated in Fig. 4. In this case, the given number of slot formats that can be indicated by each SFI field may be configured in advance by a higher layer signaling.

The user terminal may monitor a control domain (e.g., Control Resource Sets (CORESETs)) configured by a given higher layer parameter (e.g., SFI-SS) or a specific Search Space (SS) associated with the CORESET, and detect the DCI format (e.g., DCI format 2_0) used to notify the slot format information.

Furthermore, a CRC bit of the DCI format (e.g., DCI format 2_0) for notification of the slot format information may be scrambled (masked) by a scramble identifier (e.g., SFI-RNTI) different from those of DCI formats (e.g., DCI formats 0_0, 0_1, 1_0, 1_1, 2_1, 2_2 and 2_3) for other uses.

In this case, the user terminal can identify the DCI format for notification of the slot format information and the DCI formats for other uses based on a plurality of different scramble identifiers. In addition, information that indicates the SFI-RNTI may be notified (configured) from a radio base station to the user terminal by a higher layer signaling.

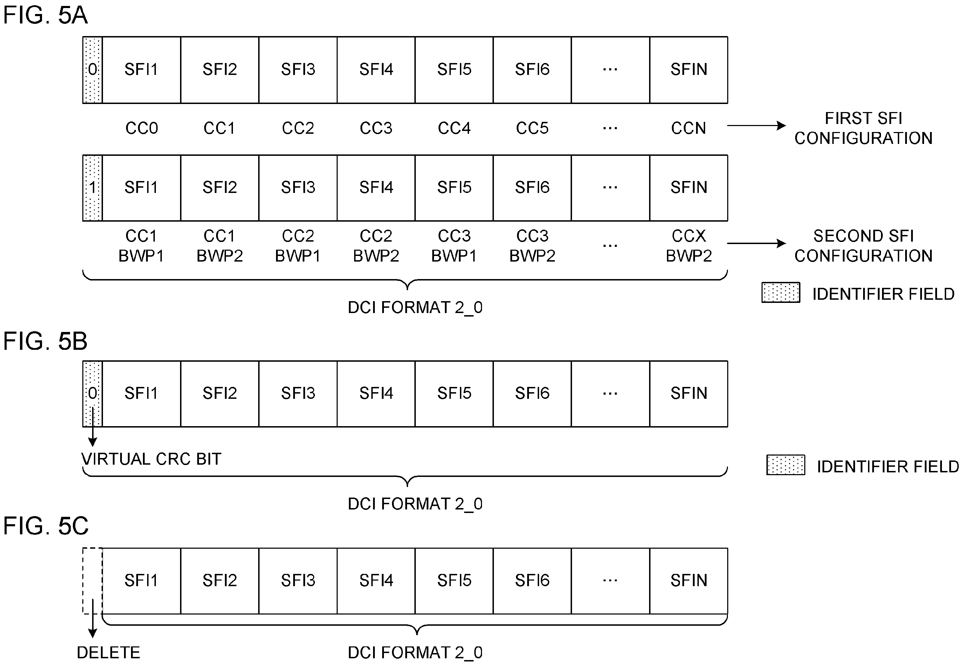

Fig. 5 is a diagram illustrating one example of the DCI format 2_0 according to the third aspect. Figs. 5A to 5C assume that the CRC bit of the DCI format 2_0 is scrambled by a scramble identifier (e.g., SFI-RNTI) different from those of the DCI formats for other uses. Furthermore, the DCI formats 2_0 illustrated in Figs. 5A to 5C are only exemplary, and part of fields may be omitted or the DCI format 2_0 may naturally include unillustrated other fields.

Fig. 5A illustrates an example where a plurality of configurations (also referred to as SFI configurations) of the DCI format 2_0 are configured to the user terminal. For example, Fig. 5A illustrates a first SFI configuration in which each SFI field in the DCI format 2_0 is provided per CC, and a second SFI configuration in which each SFI field is provided per CC and per BWP.

Fig. 5A assumes that payloads of the DCI format 2_0 of the first SFI configuration and the DCI format 2_0 of the second SFI configuration are identical, and CRC bits of both of the DCI formats 2_0 are scrambled by an identical SFI-RNTI. In this case, an identifier field of the DCI format 2_0 may be used to identify the SFI configuration.

As illustrated in, for example, Fig. 5A, a value (e.g., "0") indicating the first SFI configuration is set to the identifier field of the DCI format 2_0 of the first SFI configuration. On the other hand, a value (e.g., "1") indicating the second SFI configuration is set to the identifier field of the DCI format 2_0 of the second SFI configuration.

The user terminal may identify the SFI configuration of the DCI format 2_0 based on the identifier field value in the DCI format 2_0, and recognize a slot format indicated by each SFI field value in the DCI format 2_0 based on the identified SFI configuration.

In addition, Fig. 5A illustrates the example where the first and second SFI configurations include the identical number of SFI fields, and each SFI field value has a different meaning between the first and second SFI configurations. However, a plurality of SFI configurations are not limited to these. For example, a plurality of SFI configurations in which the number of SFI fields and the number of bits of each SFI field in the DCI format 2_0 may differ and whose payloads are identical may be identified based on the values of the above identifier fields.

Figs. 5B and 5C assume a case where a single SFI configuration is configured to the user terminal, or a case where, even when a plurality of SFI configurations are configured to the user terminal, different payloads or scramble identifiers are used between a plurality of these SFI configurations. In a case of the latter, unlike Fig. 5A, the user terminal can identify a plurality of SFI configurations without using the identifier field in the DCI format 2_0.

In Fig. 5B, the identifier field in the DCI format 2_0 may be used as the above virtual CRC bit. A fixed value (e.g., "0" or "1") may be set as the virtual CRC bit to the identifier field. Generally, when the number of known bits increases more, a greater error correction effect in the user terminal can be obtained. Hence, by using the identifier fields as the virtual CRC bits as illustrated in Fig. 5B, it is possible to improve performance.

Alternatively, as illustrated in Fig. 5C, the identifier field in the DCI format 2_0 may be deleted. That is, assuming that the DCI format 2_0 does not include an identifier field, a payload is recognized and decoded. The identifier field is deleted, so that it is possible to reduce the payload of the DCI format 2_0. Consequently, it is possible to reduce the overhead of the DCI format 2_0, and, as a result, improve the performance of a radio communication system.

According to the third aspect, it is possible to effectively use the identifier field in the DCI format used to notify the slot format information, or reduce an overhead of the DCI format by deleting the identifier field.

### (Fourth Aspect)

The fourth aspect will describe a DCI format (e.g., DCI format 2_1) used to notify at least one of a resource in which a PDSCH is assumed not to be transmitted to a user terminal, and a resource in which transmission of a PUSCH from the user terminal is stopped.

The resource in which the PDSCH is assumed not to be transmitted to the user terminal may include at least one of a frequency domain resource (e.g., one or more PRBs) and a time domain resource (e.g., one or more symbols). Similarly, the resource in which the transmission of the PUSCH from the user terminal is stopped may include at least one of the frequency domain resource (e.g., one or more PRBs) and the time domain resource (e.g., one or more symbols).

When, for example, a PDSCH is scheduled to a given number of PRBs and a given number of symbols for the user terminal, pre-emption (interruption) of another communication is assumed to occur in at least part of the PRBs and the symbols to which the PDSCH has been scheduled. In this case, the user terminal needs to assume that the PDSCH is not transmitted in a resource (e.g., at least one of the given number of PRBs and the given number of symbols) in which the pre-emption has occurred, and perform reception processing (e.g., at least one of demapping, demodulation and decoding) on the PDSCH except the resource.

Hence, the above DCI format (e.g., DCI format 2_1) may include an identifier (pre-emption identifier) indicating the resource (i.e., the resource in which the pre-emption has occurred) in which the PDSCH is assumed not to be transmitted. The user terminal may perform the reception processing (at least one of demapping, demodulation and decoding) on the PDSCH based on the pre-emption identifier.

Furthermore, when the PUSCH is scheduled to the given number of PRBs and the given number of symbols for the user terminal, pre-emption (interruption) of another communication is assumed to occur in at least part of the PRBs and the symbols to which the PUSCH has been scheduled. The user terminal needs to stop transmission of the PUSCH in the resource (e.g., at least one of the given number of PRBs and the given number of symbols) in which the another communication is performed.

Hence, the above DCI format (e.g., DCI format 2_1) may include an identifier (transmission stop identifier) indicating the resource in which transmission of the PUSCH is stopped. The user terminal may perform transmission processing (e.g., at least one of encoding, modulation and mapping) on the PUSCH based on the transmission stop identifier.

According to the fourth aspect, the above DCI format (e.g., DCI format 2_1) may include N (N ≥ 1) pre-emption identifiers or N transmission stop identifiers. A size (also referred to as, for example, a payload or the number of bits) of the DCI format, an RNTI that scrambles CRC bits and the number of blind decoding candidates may be configured by a higher layer signaling.

Each pre-emption identifier (or each transmission stop identifier) in the DCI format may be associated with at least one of specific resources (e.g., the given number of PRBs and the given number of symbols). The specific resource may be configured by a higher layer signaling. Furthermore, the pre-emption identifier (or the transmission stop identifier) in the DCI format may be specified per at least one combination of a CC (also referred to as, for example, a carrier, a cell and a serving cell), a BWP and the user terminal.

The user terminal may monitor a control domain (e.g., at least one of a CORESET and a search space) configured to the user terminal, and detect the above DCI format (e.g., DCI format 2_1). When a DCI format that has a specific payload and whose CRC bit has been scrambled by a specific RNTI is found in a search space configured in advance, the user terminal decides that the above DCI format addressed to the own user terminal has been detected.

Furthermore, a CRC bit of the DCI format (e.g., DCI format 2_1) used to notify at least one of the resource in which the PDSCH is assumed not to be transmitted to the user terminal, and the resource in which transmission of the PUSCH from the user terminal is stopped may be scrambled (masked) by a scramble identifier (e.g., Interrupting (INT)-RNTI) different from those of DCI formats (e.g., DCI formats 0_0, 0_1, 1_0, 1_1, 2_0, 2_2 and 2_3) for other uses.

In this case, the user terminal can identify a DCI format used to notify at least one of the resource in which the PDSCH is assumed not to be transmitted to the user terminal, and the resource in which transmission of the PUSCH from the user terminal is stopped, and the DCI formats for the other uses, based on a plurality of different scramble identifiers. In addition, information indicating the INT-RNTI may be notified (configured) from a radio base station to the user terminal by a higher layer signaling.

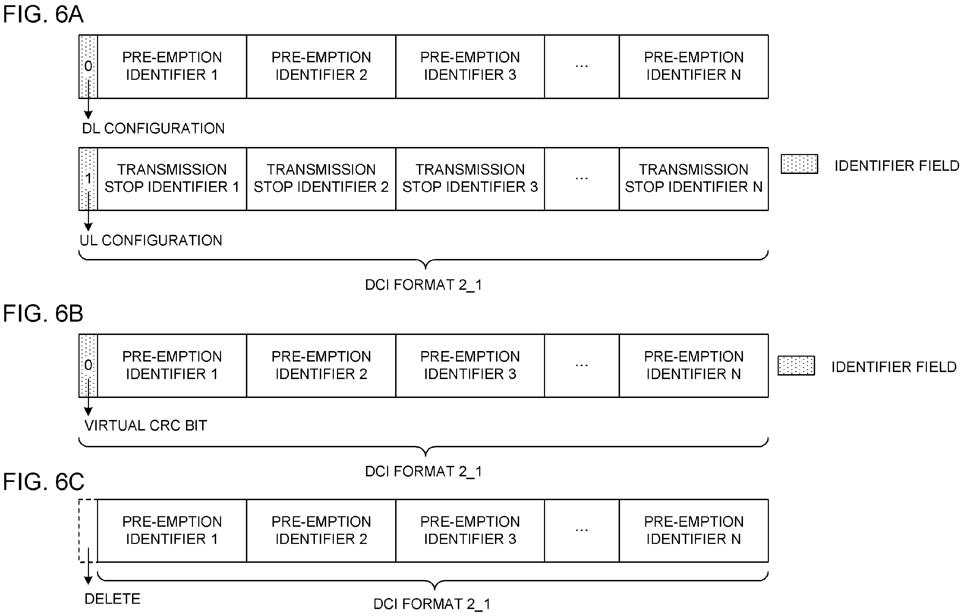

Fig. 6 is a diagram illustrating one example of the DCI format 2_1 according to the fourth aspect. Figs. 6A to 6C assume that the CRC bit of the DCI format 2_1 is scrambled by a scramble identifier (e.g., INT-RNTI) different from those of the DCI formats for other uses. Furthermore, the DCI formats 2_1 illustrated in Figs. 6A to 6C are only exemplary, and part of fields may be omitted or the DCI format 2_1 may naturally include unillustrated other fields.

Fig. 6A illustrates an example where the DCI format 2_1 includes a configuration (also referred to as, for example, a first configuration or a DL configuration) that notifies a resource in which a PDSCH is assumed not to be transmitted to the user terminal, and a configuration (also referred to as, for example, a second configuration or a UL configuration) that notifies a resource in which transmission of a PUSCH from the user terminal is stopped.

In, for example, Fig. 6A, the DCI format 2_1 of the DL configuration includes the N pre-emption identifiers. On the other hand, the DCI format 2_1 of the UL configuration includes the N transmission stop identifiers. In this regard, names of the pre-emption identifiers and the transmission stop identifiers are not limited to these, and may be field values of an identical name.

Fig. 6A assumes that payloads of the DCI format 2_1 of the DL configuration and the DCI format 2_1 of the UL configuration are identical, and CRC bits of both of the DCI formats 2_1 are scrambled by an identical INT-RNTI. In this case, an identifier field of the DCI format 2_1 may be used to identify the DL configuration or the UL configuration.

As illustrated in, for example, Fig. 6A, a value (e.g., "0") indicating the DL configuration is set to the identifier field of the DCI format 2_1 of the DL configuration. On the other hand, a value (e.g., "1") indicating the UL configuration is set to the identifier field of the DCI format 2_1 of the UL configuration.

The user terminal may identify which one of the DL configuration and the UL configuration (i.e., which one of the resource in which the PDSCH is assumed not to be transmitted and the resource in which transmission of the PUSCH is stopped is indicated) the DCI format is, based on the identifier field value in the DCI format 2_1, and control reception of the PDSCH or transmission of the PUSCH based on one or more pre-emption identifiers or transmission stop identifiers in the DCI format 2_1.

In addition, in Fig. 6A, the numbers of pre-emption identifiers and transmission stop identifiers (N) in the DCI format 2_1 are identical, yet may not be identical. Even when, for example, the numbers of pre-emption identifiers and transmission stop identifiers in the DCI format 2_1 are different, the numbers of bits of one or more pre-emption identifiers (or one or more transmission stop identifiers) may be differed to maintain identical payloads.

Figs. 6B and 6C assume a case where the DCI format 2_1 includes only the DL configuration, or a case where different payloads or scramble identifiers are used between the DL configuration and the UL configuration. In a case of the latter, unlike Fig. 6A, the user terminal can identify the DL configuration and the UL configuration without using the identifier field in the DCI format 2_1.

In Fig. 6B, the identifier field in the DCI format 2_1 may be used as the above virtual CRC bit. A fixed value (e.g., "0" or "1") may be set as the virtual CRC bit to the identifier field. Generally, when a known bit value increases more, a greater error correction effect in the user terminal can be obtained. Hence, by using the identifier fields as the virtual CRC bits as illustrated in Fig. 6B, it is possible to improve performance.

Alternatively, as illustrated in Fig. 6C, the identifier field in the DCI format 2_1 may be deleted. The identifier field is deleted, so that it is possible to reduce the payload of the DCI format 2_1. Consequently, it is possible to reduce the overhead of the DCI format 2_1, and, as a result, improve the performance of a radio communication system.

In addition, Figs. 6B and 6C illustrate only the DCI format 2_1 of the DL configuration. However, the identifier field in the DCI format 2_1 of the UL configuration may be used as the virtual CRC bit, or the identifier field may be deleted.

According to the fourth aspect, it is possible to effectively use an identifier field in a DCI format used to notify at least one of a resource in which a PDSCH is assumed not to be transmitted to the user terminal, and a resource in which transmission of a PUSCH from the user terminal is stopped, or reduce an overhead of the DCI format by deleting the identifier field.

### (Fifth Aspect)

The fifth aspect will describe a DCI format (e.g., DCI format 2_2) used to transmit a TPC command for at least one of a PUCCH and a PUSCH. A user terminal controls transmission power of at least one of the PUCCH and the PUSCH based on a value indicated by the TPC command in the DCI format.

According to the fifth aspect, the above DCI format (e.g., DCI format 2_2) may include N (N ≥ 1) TPC commands (also referred to as, for example, TPC command fields or TPC command field values). Each TPC command may be a given number of bits. For example, a 2-bit TPC command may indicate four levels of values (e.g., -1, 0, 1 and 3 or -4, -1, 1 and 4) according to each field value that can be taken. In addition, the N TPC commands may be each given a number (TPC command number).

Each TPC command in the DCI format may indicate a value of a TPC command associated with at least one combination of a CC (also referred to as, for example, a carrier, a cell or a serving cell), a BWP and the user terminal.

The user terminal may monitor a control domain (e.g., at least one of a CORESET and a search space) configured to the user terminal, and detect the above DCI format (e.g., DCI format 2_2).

Furthermore, a CRC bit of the DCI format (e.g., DCI format 2_2) used to transmit the TPC command for at least one of the PUCCH and the PUSCH may be scrambled (masked) by a scramble identifier (e.g., TPC-RNTI (that may include a TPC-PUSCH-RNTI and a TPC-PUCCH-RNTI) different from those of DCI formats (e.g., DCI formats 0_0, 0_1, 1_0, 1_1, 2_0, 2_1 and 2_3) for other uses.

In this case, the user terminal can identify the DCI format used to transmit the TPC command for at least one of the PUCCH and the PUSCH, and the DCI formats for other uses based on a plurality of different scramble identifiers. In addition, information that indicates the TPC-RNTI may be notified (configured) from a radio base station to the user terminal by a higher layer signaling.

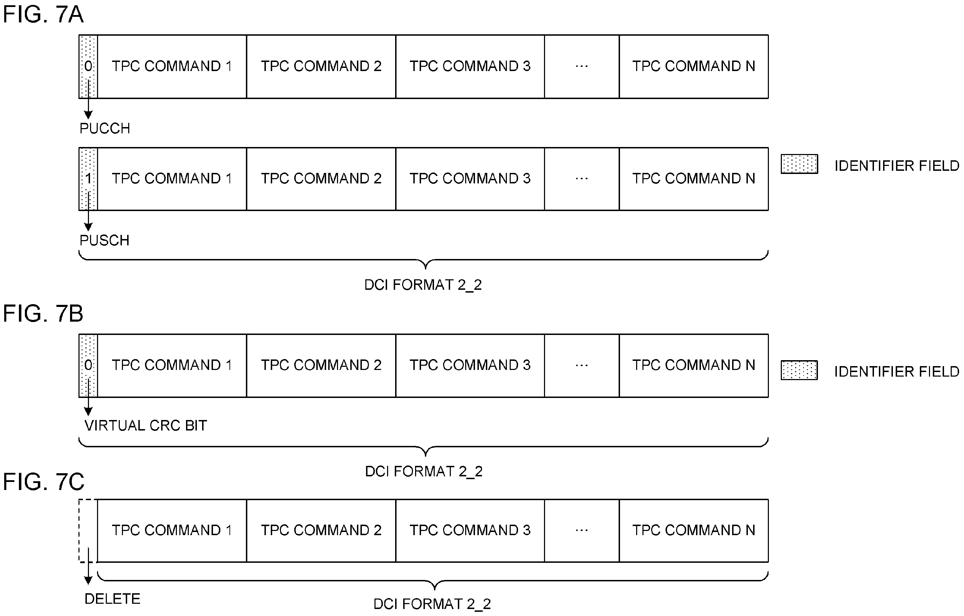

Fig. 7 is a diagram illustrating one example of the DCI format 2_2 according to the fifth aspect. Figs. 7A to 7C assume that the CRC bit of the DCI format 2_2 is scrambled by a scramble identifier (e.g., TPC-RNTI) different from those of the DCI formats for other uses. Furthermore, the DCI formats 2_2 illustrated in Figs. 7A to 7C are only exemplary, and part of fields may be omitted or the DCI format 2_2 may naturally include unillustrated other fields.

Fig. 7A assumes that payloads of the DCI format 2_2 used to transmit a TPC command for a PUCCH and the DCI format 2_2 used to transmit a TPC command for a PUSCH are identical, and CRC bits of both of the DCI formats 2_2 are scrambled by an identical TPC-RNTI. In this case, an identifier field of the DCI format 2_2 may be used to identify transmission of which one of the TPC command for the PUCCH and the TPC command for the PUSCH the DCI format 2_2 is used for.

As illustrated in, for example, Fig. 7A, one of a value (e.g., "0") indicating transmission of the TPC command for the PUCCH and a value (e.g., "1") indicating transmission of the TPC command for the PUSCH may be set to the identifier field of the DCI format 2_2.

The user terminal may recognize transmission of which one of TPC commands for the PUCCH and the PUSCH the DCI format is used for, based on an identifier field value in the DCI format 2_2, and control transmission power of the PUCCH or the PUSCH based on one or more TPC commands in the DCI format 2_2. For example, the user terminal may control the transmission power of the PUCCH or the PUSCH based on a value indicated by a TPC command associated with a cell that transmits the PUCCH or the PUSCH.

Figs. 7B and 7C assume cases where different payloads or different scramble identifiers (e.g., TPC-PUCCH-RNTIs and TPC-PUSCH-RNTIs) are used between the DCI format 2_2 used to transmit the TPC command for the PUCCH and the DCI format 2_2 used to transmit the TPC command for the PUSCH. In this case, the user terminal can identify transmission of which one of the TPC command for the PUCCH and the TPC command for the PUSCH the DCI format 2_2 is used for, based on the different payloads or scramble identifiers.

In Fig. 7B, the identifier field in the DCI format 2_2 may be used as the above virtual CRC bit. A fixed value (e.g., "0" or "1") may be set as the virtual CRC bit to the identifier field. Generally, when a known bit value increases more, a greater error correction effect in the user terminal can be obtained. Hence, by using the identifier fields as the virtual CRC bits as illustrated in Fig. 7B, it is possible to improve performance.

Alternatively, as illustrated in Fig. 7C, the identifier field in the DCI format 2_2 may be deleted. The identifier field is deleted, so that it is possible to reduce the payload of the DCI format 2_2. Consequently, it is possible to reduce the overhead of the DCI format 2_2, and, as a result, improve the performance of a radio communication system.

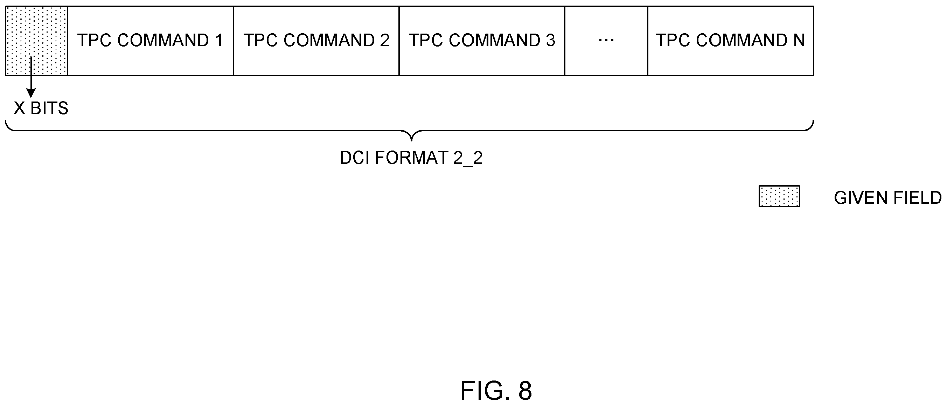

Fig. 8 is a diagram illustrating another example of the DCI format 2_2 according to the fifth aspect. In addition, Fig. 8 assumes that the user terminal can identify transmission of which one of the TPC command for the PUCCH and the TPC command for the PUSCH the DCI format 2_2 is used for, based on different payloads or different scramble identifiers.

As illustrated in Fig. 8, a 1-bit identifier field of the DCI format 2_2 may be expanded to an X (e.g., 2 or 3)-bit given field. The given field value may indicate the CC (also referred to as, for example, a carrier, a cell or a serving cell), with which transmission of TPC command using the DCI format 2_2 is associated or may indicate the BWP, with which transmission of TPC command using the DCI format 2_2 is associated.

Transmission of the PUSCH assumes a type (also referred to as, for example, a 0th type, a grant type or a scheduled grant) that uses a resource scheduled by the DCI format 1_0 or 1_1, and a type (also referred to as, for example, a first type and a second type, a grant free type 1 and a grant free type 2, a configured grant or grant free) that uses a resource configured by a higher layer signaling. The grant free type 2 is a method for activating/deactivating a PUSCH resource configured in advance by a higher layer by using DCI. In addition to the grant free type 2, the grant free type 1 is a method that does not perform activation/deactivation using the DCI, and transmits the PUSCH without an L2/L1 instruction from a base station when a PUSCH resource is configured by an RRC signaling.

The grant free type 1 and type 2 are assumed to be used in both of a primary cell (P cell) (primary carrier) and a secondary cell (S cell) (secondary carrier).

The above DCI format 2_2 is assumed to be used for at least one of a PUSCH of the grant type, a PUSCH of the grant free type 1, a PUSCH of the grant free type 2 and a PUCCH. On the other hand, the above DCI format 2_2 is assumed to be used in one or more cells (P cells) in which the PUCCH is transmitted, or a cell (the P cell and a Primary Secondary cell (PS cell)) in which the PUCCH is transmitted in different cell groups.

Hence, the X-bit given field value in the DCI format 2_2 may indicate the cell (also referred to as, for example, a carrier, a cell or a serving cell), with which transmission of TPC command using the DCI format 2_2 is associated. Furthermore, the given field value may indicate the BWP or the cell and the BWP, with which transmission of TPC command using the DCI format 2_2 is associated.

According to the fifth aspect, it is possible to effectively use an identifier field in a DCI format used to transmit a TPC command of at least one of a PUCCH and a PUSCH, reduce an overhead of the DCI format by deleting the identifier field, or appropriately identify the CC (and the BWP), with which transmission of TPC command using the DCI format is associated, based on the X-bit given field obtained by expanding the identifier field.

### (Sixth Aspect)

The sixth aspect will describe a DCI format (e.g., DCI format 2_3) used to transmit a reference signal (e.g., SRS) from one or more user terminals. The user terminal may control transmission of the SRS based on a value indicated by a block number in the DCI format.

According to the sixth aspect, the above DCI format (e.g., DCI format 2_3) may include B (B ≥ 1) blocks. Each block may indicate, for example, a TPC command, and the user terminal may control the SRS or a cell in which a TPC command is reflected based on each block. In addition, the B blocks may be each given a number (block number).

Furthermore, the above DCI format may include a field (SRS request field) that requests transmission of the SRS from the user terminal. The SRS request field may be included in a given block. A value of the SRS request field may indicate in which cell (also referred to as, for example, a CC, a serving cell or a carrier) transmission of the SRS is requested.

Furthermore, the above DCI format may include a TPC command (also referred to as, for example, a TPC command field). The TPC command may be included in a given block. The user terminal may control transmission power of the SRS based on the TPC command.

The user terminal may monitor a control domain (e.g., at least one of a CORESET and a search space) configured to the user terminal, and detect the above DCI format (e.g., DCI format 2_3).

Furthermore, a CRC bit of the above DCI format (e.g., DCI format 2_3) may be scrambled (masked) by a scramble identifier (e.g., srs-TPC-RNTI) different from those of DCI formats (e.g., DCI formats 0_0, 0_1, 1_0, 1_1, 2_0, 2_1 and 2_2) for other uses.

In this case, the user terminal can identify the DCI format used to transmit the SRS from the user terminal and the DCI formats for other uses based on a plurality of different scramble identifiers. In addition, information that indicates the srs-TPC-RNTI may be notified (configured) from a radio base station to the user terminal by a higher layer signaling.

It is assumed that a plurality of UL carriers (also referred to as, for example, UL cells) are configured to a single DL carrier (also referred to as, for example, a DL cell) for the user terminal. UL carriers for which there are corresponding DL carriers among a plurality of these UL carriers will be also referred to as normal UL carriers, and UL carriers for which there is not a corresponding DL carrier will be also referred to as a Supplemental UL carrier (SUL: Supplemental Uplink).

An identifier field in a DCI format used to transmit the SRS from the user terminal may be used to identify which one of the normal UL carrier and the SUL a UL carrier used to transmit the SRS by the user terminal is.

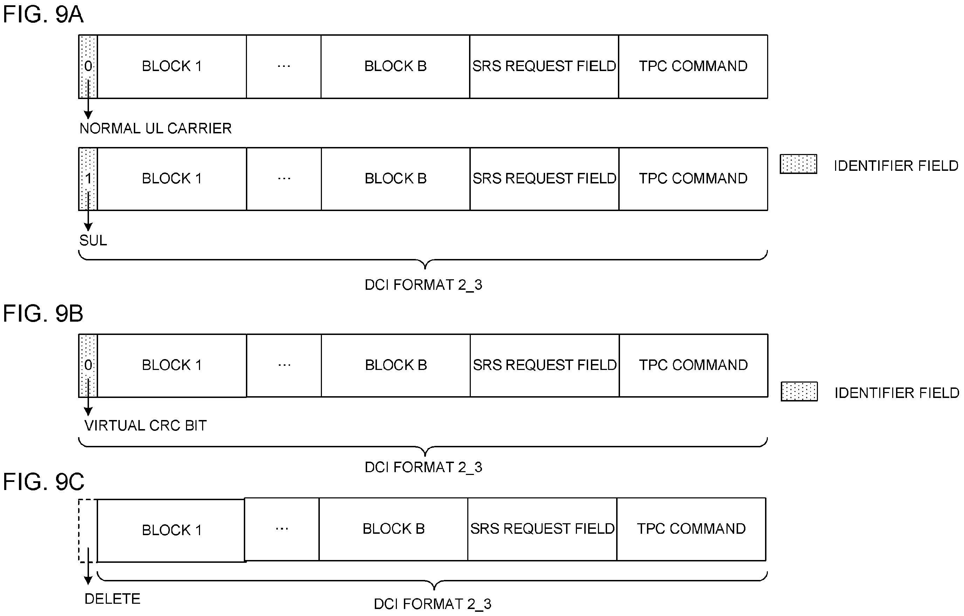

Fig. 9 is a diagram illustrating one example of the DCI format 2_3 according to the sixth aspect. Figs. 9A to 9C assume that a CRC bit of the DCI format 2_3 is scrambled by a scramble identifier (e.g., srs-TPC-RNTI) different from those of the DCI formats for other uses.

Furthermore, the DCI formats 2_3 illustrated in Figs. 9A to 9C are only exemplary, and part of fields may be omitted or the DCI format 2_3 may naturally include unillustrated other fields (e.g., at least one of an SRS request field per block and a TPC command per block).

Fig. 9A assumes that payloads of the DCI format 2_3 used to transmit the SRS of the normal UL carrier and the DCI format 2_3 used to transmit the SRS of the SUL are identical, and CRC bits of both of the DCI formats 2_3 are scrambled by an identical srs-TPC-RNTI. In this case, an identifier field of the DCI format 2_3 may be used to identify transmission of which one of the SRS of the normal UL carrier and the SRS of the SUL the DCI format 2_3 is used for.

As illustrated in, for example, Fig. 9A, one of a value (e.g., "0") indicating the normal UL carrier and a value (e.g., "1") indicating the SUL may be set to the identifier field of the DCI format 2_3.

The user terminal may recognize transmission of which one of the SRS of the normal UL carrier or the SRS of the SUL the DCI format is used for, based on an identifier field value in the DCI format 2_3. Furthermore, the user terminal may control transmission of the SRS of the identified UL carrier based on at least one of the block, the SRS request field and the TPC command included in the DCI format 2_3.

Figs. 9B and 9C assume cases where different payloads or different scramble identifiers are used between the DCI format 2_3 used to transmit the SRS of the normal UL carrier and the DCI format 2_3 used to transmit the SRS of the SUL. In this case, the user terminal can identify which one of the SRS of the normal UL carrier and the SRS of the SUL the DCI format 2_3 targets at, based on the different payloads or scramble identifiers.

In Fig. 9B, the identifier field in the DCI format 2_3 may be used as the above virtual CRC bit. A fixed value (e.g., "0" or "1") may be set as the virtual CRC bit to the identifier field. Generally, when a known bit value increases more, a greater error correction effect in the user terminal can be obtained. Hence, by using the identifier fields as the virtual CRC bits as illustrated in Fig. 9B, it is possible to improve performance.

Alternatively, as illustrated in Fig. 9C, the identifier field in the DCI format 2_3 may be deleted. The identifier field is deleted, so that it is possible to reduce the payload of the DCI format 2_3. Consequently, it is possible to reduce the overhead of the DCI format 2_3, and, as a result, improve the performance of a radio communication system.

According to the sixth aspect, it is possible to effectively use the identifier field in the DCI format used to transmit an SRS from the user terminal, or reduce an overhead of the DCI format by deleting the identifier field.

### (Radio Communication System)

The configuration of the radio communication system according to the present embodiment will be described below. This radio communication system is applied the radio communication method according to each of the above aspects. In addition, the radio communication method according to each of the above aspects may be applied alone or may be applied by combining at least two of the radio communication methods.

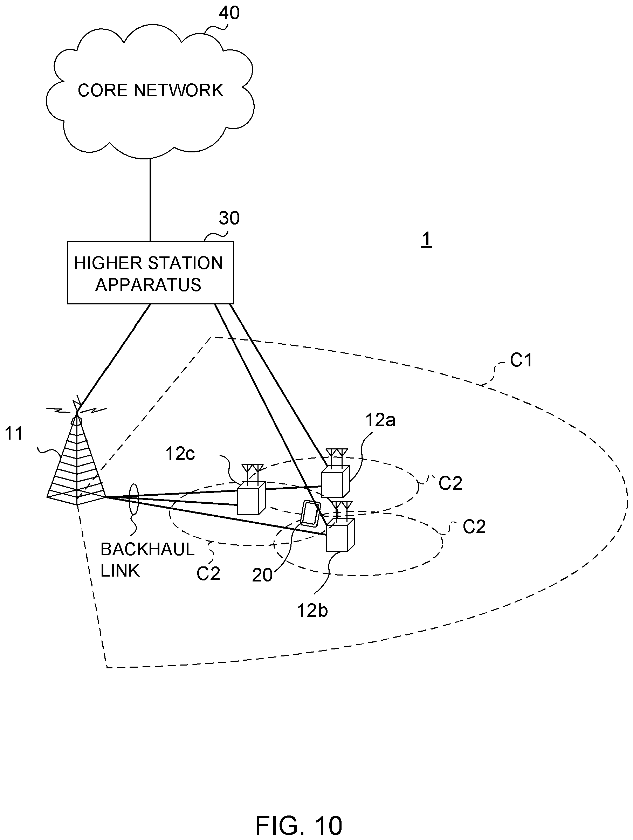

Fig. 10 is a diagram illustrating one example of a schematic configuration of the radio communication system according to the present embodiment. A radio communication system 1 can apply Carrier Aggregation (CA) and/or Dual Connectivity (DC) that aggregate a plurality of base frequency blocks (component carriers) whose 1 unit is a system bandwidth (e.g., 20 MHz) of the LTE system. In this regard, the radio communication system 1 may be referred to as SUPER 3G, LTE-Advanced (LTE-A), IMT-Advanced, 4G, 5G, Future Radio Access (FRA) or New Radio Access Technology (NR: New-RAT).

The radio communication system 1 illustrated in Fig. 10 includes a radio base station 11 that forms a macro cell C1, and radio base stations 12a to 12c that are located in the macro cell C1 and form small cells C2 narrower than the macro cell C1. Furthermore, a user terminal 20 is located in the macro cell C1 and each small cell C2. Different numerologies may be configured to be applied between cells and/or in the cells.

In addition, the numerology is a communication parameter (e.g., at least one of a spacing of a subcarrier (subcarrier spacing), a bandwidth, a symbol length, a CP time duration (CP length), a subframe length, a TTI time duration (TTI length), the number of symbols per TTI, a radio frame configuration, filtering processing and windowing processing) in a frequency direction and/or a time direction. The radio communication system 1 may support subcarrier spacings such as 15 kHz, 30 kHz, 60 kHz, 120 kHz and 240 kHz.

The user terminal 20 can connect with both of the radio base station 11 and the radio base stations 12. The user terminal 20 is assumed to concurrently use the macro cell C1 and the small cells C2 that use different frequencies by CA or DC. Furthermore, the user terminal 20 can apply CA or DC by using a plurality of cells (CCs) (e.g., two CCs or more). Furthermore, the user terminal can use licensed band CCs and unlicensed band CCs as a plurality of cells.

Furthermore, the user terminal 20 can perform communication by using Time Division Duplex (TDD) or Frequency Division Duplex (FDD) in each cell. A TDD cell and an FDD cell may be referred to as a TDD carrier (frame configuration type 2) and an FDD carrier (frame configuration type 1), respectively.

Furthermore, each cell (carrier) may be applied a single numerology or may be applied a plurality of different numerologies.

The user terminal 20 and the radio base station 11 can communicate by using a carrier (referred to as a Legacy carrier) of a narrow bandwidth in a relatively low frequency band (e.g., 2 GHz). On the other hand, the user terminal 20 and each radio base station 12 may use a carrier of a wide bandwidth in a relatively high frequency band (e.g., 3.5 GHz, 5 GHz or 30 to 70 GHz) or may use the same carrier as that used between the user terminal 20 and the radio base station 11. In this regard, a configuration of the frequency band used by each radio base station is not limited to this.

The radio base station 11 and each radio base station 12 (or the two radio base stations 12) can be configured to be connected by way of wired connection (e.g., optical fibers compliant with a Common Public Radio Interface (CPRI) or an X2 interface) or radio connection.

The radio base station 11 and each radio base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each radio base station 12 may be connected with the higher station apparatus 30 via the radio base station 11.

In this regard, the radio base station 11 is a radio base station that has a relatively wide coverage, and may be referred to as a macro base station, an aggregate node, an eNodeB (eNB), a gNode (gNB) or a transmission/reception point (TRP). Furthermore, each radio base station 12 is a radio base station that has a local coverage, and may be referred to as a small base station, a micro base station, a pico base station, a femto base station, a Home eNodeB (HeNB), a Remote Radio Head (RRH), an eNB, a gNB or a transmission/reception point. The radio base stations 11 and 12 will be collectively referred to as a radio base station 10 below when not distinguished.

Each user terminal 20 is a terminal that supports various communication schemes such as LTE, LTE-A, 5G, 5G+, NR and Rel. 15~, and may include not only a mobile communication terminal but also a fixed communication terminal. Furthermore, the user terminal 20 can perform Device-to-Device communication (D2D) with the other user terminal 20.

The radio communication system 1 can apply Orthogonal Frequency-Division Multiple Access (OFDMA) to Downlink (DL) and can apply Single Carrier-Frequency Division Multiple Access (SC-FDMA) to Uplink (UL) as radio access schemes. OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into bands including one or contiguous resource blocks per terminal and causes a plurality of terminals to use respectively different bands to reduce an inter-terminal interference. In this regard, uplink and downlink radio access schemes are not limited to a combination of these schemes, and OFDMA may be used on UL.

Furthermore, the radio communication system 1 may use a multicarrier waveform (e.g., OFDM waveform), or may use a single carrier waveform (e.g., DFT-s-OFDM waveform).

The radio communication system 1 uses a DL shared channel (also referred to as, for example, a PDSCH: Physical Downlink Shared Channel or a downlink data channel) shared by each user terminal 20, a broadcast channel (PBCH: Physical Broadcast Channel) and an L1/L2 control channel as Downlink (DL) channels. User data, higher layer control information and a System Information Block (SIB) are conveyed on the PDSCH. Furthermore, a Master Information Block (MIB) is conveyed on the PBCH.

The L1/L2 control channel includes a downlink control channel (a Physical Downlink Control Channel (PDCCH) or an Enhanced Physical Downlink Control Channel (EPDCCH)), a Physical Control Format Indicator Channel (PCFICH), and a Physical Hybrid-ARQ Indicator Channel (PHICH). Downlink Control Information (DCI) including scheduling information of the PDSCH and the PUSCH is conveyed on the PDCCH. The number of OFDM symbols used for the PDCCH is conveyed on the PCFICH. The EPDCCH is subjected to frequency division multiplexing with the PDSCH and is used to convey DCI, etc. similar to the PDCCH. Transmission acknowledgement information (ACK/NACK) of an HARQ for the PUSCH can be conveyed on at least one of the PHICH, the PDCCH and the EPDCCH.

The radio communication system 1 uses an uplink shared channel (also referred to as, for example, a PUSCH: Physical Uplink Shared Channel or an uplink data channel) shared by each user terminal 20, an uplink control channel (PUCCH: Physical Uplink Control Channel), and a random access channel (PRACH: Physical Random Access Channel) as Uplink (UL) channels. User data and higher layer control information are conveyed on the PUSCH. Uplink Control Information (UCI) including at least one of transmission acknowledgement information (A/N) or Channel State Information (CSI) of a Downlink (DL) signal is conveyed on the PUSCH or the PUCCH. A random access preamble for establishing connection with a cell can be conveyed on the PRACH.

### <Radio Base Station>

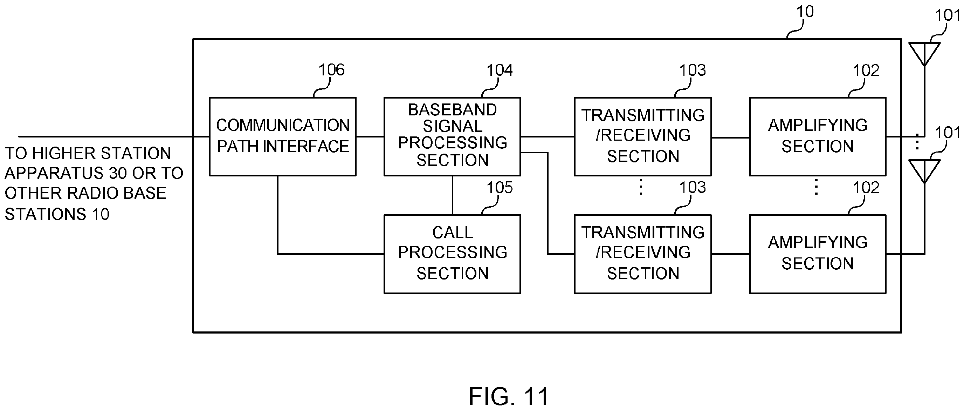

Fig. 11 is a diagram illustrating one example of an overall configuration of the radio base station according to the present embodiment. The radio base station 10 includes pluralities of transmission/reception antennas 101, amplifying sections 102 and transmitting/receiving sections 103, a baseband signal processing section 104, a call processing section 105 and a communication path interface 106. In this regard, the radio base station 10 only needs to be configured to include one or more of each of the transmission/reception antennas 101, the amplifying sections 102 and the transmitting/receiving sections 103.

User data transmitted from the radio base station 10 to the user terminal 20 on downlink is input from the higher station apparatus 30 to the baseband signal processing section 104 via the communication path interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., Hybrid Automatic Repeat reQuest (HARQ) transmission processing), and transmission processing such as scheduling, transmission format selection, channel coding, Inverse Fast Fourier Transform (IFFT) processing, and precoding processing on the user data, and transfers the user data to each transmitting/receiving section 103. Furthermore, the baseband signal processing section 104 performs transmission processing such as channel coding and inverse fast Fourier transform on a downlink control signal, too, and transfers the downlink control signal to each transmitting/receiving section 103.

Each transmitting/receiving section 103 converts a baseband signal precoded and output per antenna from the baseband signal processing section 104 into a radio frequency range, and transmits a radio frequency signal. The radio frequency signal subjected to frequency conversion by each transmitting/receiving section 103 is amplified by each amplifying section 102, and is transmitted from each transmission/reception antenna 101.

The transmitting/receiving sections 103 can be composed of transmitters/receivers, transmission/reception circuits or transmission/reception apparatuses described based on a common knowledge in a technical field according to the present invention. In this regard, the transmitting/receiving sections 103 may be composed as an integrated transmitting/receiving section or may be composed of transmitting sections and receiving sections.

Meanwhile, each amplifying section 102 amplifies a radio frequency signal received by each transmission/reception antenna 101 as an Uplink (UL) signal. Each transmitting/receiving section 103 receives the UL signal amplified by each amplifying section 102. Each transmitting/receiving section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, MAC retransmission control reception processing, and reception processing of an RLC layer and a PDCP layer on UL data included in the input UL signal, and transfers the UL data to the higher station apparatus 30 via the communication path interface 106. The call processing section 105 performs call processing such as configuration and release of a communication channel, state management of the radio base station 10 and radio resource management.

The communication path interface 106 transmits and receives signals to and from the higher station apparatus 30 via a given interface. Furthermore, the communication path interface 106 may transmit and receive (backhaul signaling) signals to and from the neighboring radio base station 10 via an inter-base station interface (e.g., optical fibers compliant with the Common Public Radio Interface (CPRI) or the X2 interface).

Furthermore, each transmitting/receiving section 103 transmits a Downlink (DL) signal (including at least one of a DL data signal, a DL control signal and a DL reference signal) to the user terminal 20, and receives an Uplink (UL) signal (including at least one of a UL data signal, a UL control signal and a UL reference signal) from the user terminal 20.

Furthermore, each transmitting/receiving section 103 transmits DCI for the user terminal 20 by using a downlink control channel. More specifically, each transmitting/receiving section 103 may transmit a plurality of pieces of Downlink Control Information (DCI) whose payloads are identical and whose identifiers used to scramble cyclic redundancy check bits are identical. Furthermore, each transmitting/receiving section 103 may transmit control information (higher layer control information) of a higher layer signaling.

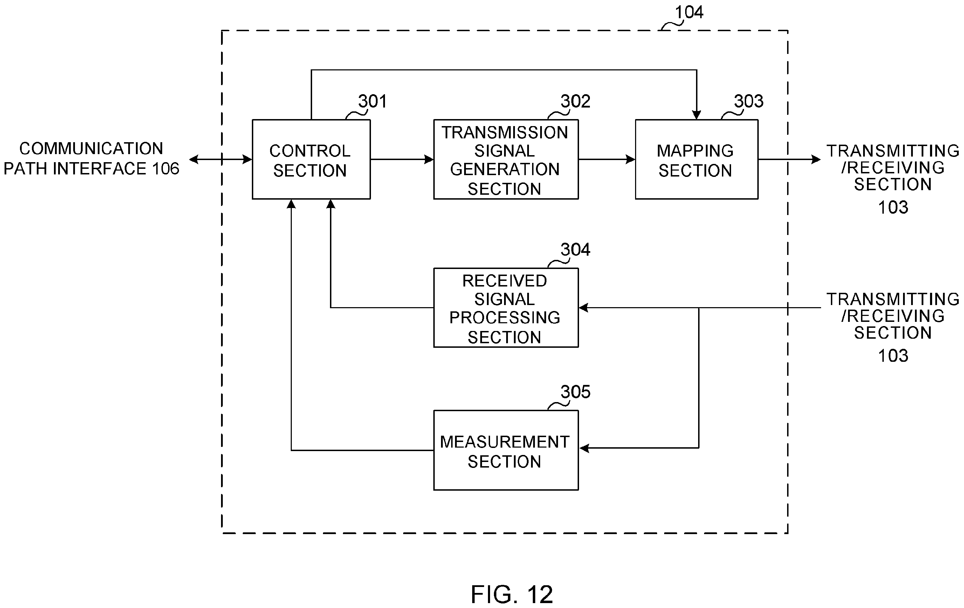

Fig. 12 is a diagram illustrating one example of a function configuration of the radio base station according to the present embodiment. In addition, Fig. 12 mainly illustrates function blocks of characteristic portions according to the present embodiment, and assumes that the radio base station 10 includes other function blocks, too, that are necessary for radio communication. As illustrated in Fig. 12, the baseband signal processing section 104 includes a control section 301, a transmission signal generation section 302, a mapping section 303, a received signal processing section 304 and a measurement section 305.

The control section 301 controls the entire radio base station 10. The control section 301 controls, for example, DL signal generation of the transmission signal generation section 302, DL signal mapping of the mapping section 303, UL signal reception processing (e.g., demodulation) of the received signal processing section 304, and measurement of the measurement section 305.

More specifically, the control section 301 schedules the user terminal 20. More specifically, the control section 301 may perform scheduling and/or retransmission control on a downlink shared channel and/or an uplink shared channel.

Furthermore, the control section 301 may control generation of the DCI. More specifically, the control section 301 may control identifier field values of a plurality of pieces of DCI. A plurality of pieces of these DCI may have identical payloads and identical identifiers used to scramble the CRC bits.

Furthermore, when a plurality of pieces of above DCI are a plurality of pieces of DCI used to schedule at least one of the downlink shared channel and the uplink shared channel, the control section 301 may control generation of a plurality of these identifier field values (first and second aspects).

Furthermore, when a plurality of pieces of above DCI are a plurality of pieces of DCI having different slot format identifier configurations, the control section 301 may control generation of a plurality of these identifier field values (third aspect).

Furthermore, when a plurality of pieces of above DCI are first DCI including an identifier indicating a resource in which the downlink shared channel is assumed not to be transmitted, and second DCI including an identifier indicating a resource in which transmission of the uplink shared channel is stopped, the control section 301 may control generation of identifier field values of the first DCI and the second DCI (fourth aspect).

Furthermore, when a plurality of pieces of above DCI are first DCI including a command for Transmission Power Control (TPC) of the downlink shared channel and second DCI including a command for TPC of the uplink shared channel, the control section 301 may control generation of identifier field values of the first DCI and the second DCI (fifth aspect).

Furthermore, when a plurality of pieces of above DCI are first DCI including a command for TPC of an SRS of a normal UL carrier, and second DCI including a command for TPC of an SRS of an SUL, the control section 301 may control generation of identifier field values of the first DCI and the second DCI (sixth aspect).

The control section 301 can be composed of a controller, a control circuit or a control apparatus described based on the common knowledge in the technical field according to the present invention.

The transmission signal generation section 302 generates a DL signal (such as a DL data signal, a DL control signal or a DL reference signal) based on an instruction from the control section 301, and outputs the DL signal to the mapping section 303.

The transmission signal generation section 302 can be composed of a signal generator, a signal generating circuit or a signal generating apparatus described based on the common knowledge in the technical field according to the present invention.

The mapping section 303 maps the DL signal generated by the transmission signal generation section 302, on given radio resources based on the instruction from the control section 301, and outputs the DL signal to each transmitting/receiving section 103. The mapping section 303 can be composed of a mapper, a mapping circuit or a mapping apparatus described based on the common knowledge in the technical field according to the present invention.

The received signal processing section 304 performs reception processing (e.g., demapping, demodulation and decoding) on a UL signal (including, for example, a UL data signal, a UL control signal or UL reference signal) transmitted from the user terminal 20. More specifically, the received signal processing section 304 outputs the received signal or the signal after the reception processing to the measurement section 305. Furthermore, the received signal processing section 304 performs reception processing on UCI based on an uplink control channel configuration instructed by the control section 301.

The measurement section 305 performs measurement related to the received signal. The measurement section 305 can be composed of a measurement instrument, a measurement circuit or a measurement apparatus described based on the common knowledge in the technical field according to the present invention.

The measurement section 305 may measure UL channel quality based on, for example, received power (e.g., Reference Signal Received Power (RSRP)) and/or received quality (e.g., Reference Signal Received Quality (RSRQ)) of a UL reference signal. The measurement section 305 may output a measurement result to the control section 301.

### <User Terminal>

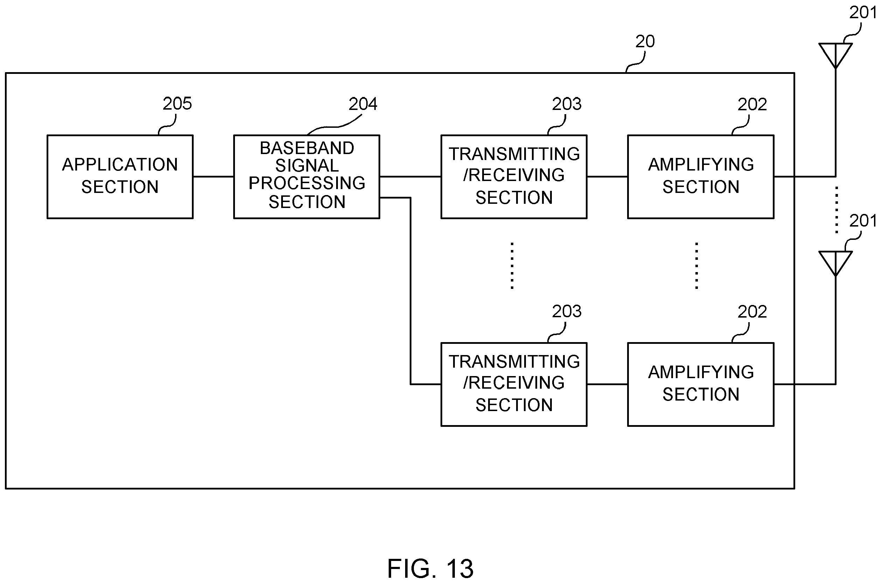

Fig. 13 is a diagram illustrating one example of an overall configuration of the user terminal according to the present embodiment. The user terminal 20 includes pluralities of transmission/reception antennas 201 for MIMO transmission, amplifying sections 202 and transmitting/receiving sections 203, a baseband signal processing section 204 and an application section 205.

The respective amplifying sections 202 amplify radio frequency signals received at a plurality of transmission/reception antennas 201. Each transmitting/receiving section 203 receives a DL signal amplified by each amplifying section 202. Each transmitting/receiving section 203 performs frequency conversion on the received signal into a baseband signal, and outputs the baseband signal to the baseband signal processing section 204.

The baseband signal processing section 204 performs FFT processing, error correcting decoding and retransmission control reception processing on the input baseband signal. The baseband signal processing section 204 transfers DL data to the application section 205. The application section 205 performs processing related to layers higher than a physical layer and an MAC layer. Furthermore, the baseband signal processing section 204 may transfer broadcast information, too, to the application section 205.

On the other hand, the application section 205 inputs Uplink (UL) data to the baseband signal processing section 204. The baseband signal processing section 204 performs retransmission control transmission processing (e.g., HARQ transmission processing), channel coding, rate matching, puncturing, Discrete Fourier Transform (DFT) processing and IFFT processing on the uplink data, and transfers the uplink data to each transmitting/receiving section 203. The baseband signal processing section 204 performs at least one of channel coding, rate matching, puncturing, DFT processing and IFFT processing on the UCI, too, and transfers the UCI to each transmitting/receiving section 203.

Each transmitting/receiving section 203 converts the baseband signal output from the baseband signal processing section 204 into a radio frequency range, and transmits a radio frequency signal. The radio frequency signal subjected to the frequency conversion by each transmitting/receiving section 203 is amplified by each amplifying section 202, and is transmitted from each transmission/reception antenna 201.

Furthermore, each transmitting/receiving section 203 receives the Downlink (DL) signal (including the DL data signal, the DL control signal and the DL reference signal) of numerologies configured to the user terminal 20, and transmits the Uplink (UL) signal (including the UL data signal, the UL control signal and the UL reference signal) of the numerologies.

Furthermore, each transmitting/receiving section 303 receives the DCI for the user terminal 20 by using the downlink control channel. More specifically, each transmitting/receiving section 203 may receive a plurality of pieces of Downlink Control Information (DCI) whose payloads are identical and whose identifiers used to scramble cyclic redundancy check bits are identical. Furthermore, each transmitting/receiving section 203 may receive control information (higher layer control information) of a higher layer signaling.

The transmitting/receiving sections 203 can be composed as transmitters/receivers, transmission/reception circuits or transmission/reception apparatuses described based on the common knowledge in the technical field according to the present invention. Furthermore, the transmitting/receiving sections 203 may be composed as an integrated transmitting/receiving section or may be composed of transmitting sections and receiving sections.

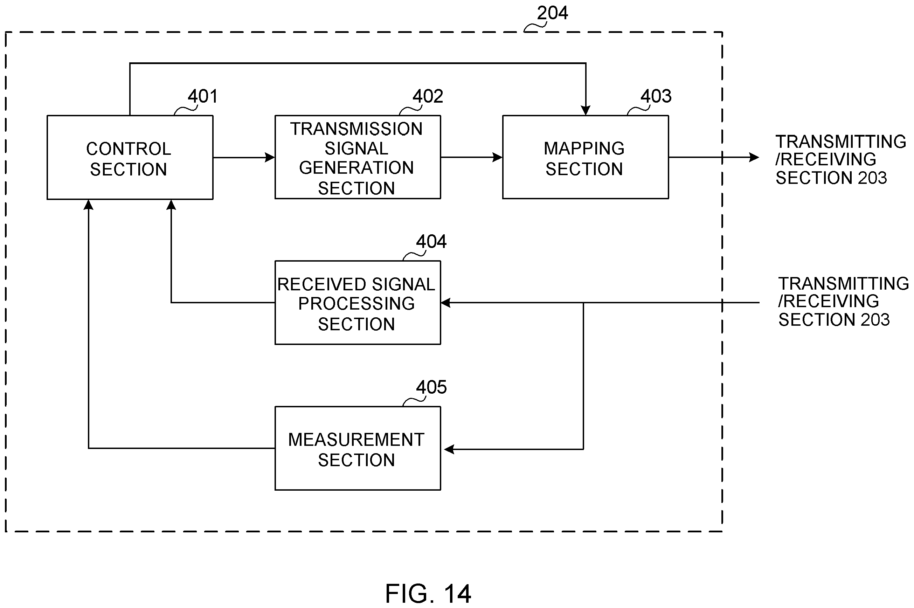

Fig. 14 is a diagram illustrating one example of a function configuration of the user terminal according to the present embodiment. In addition, Fig. 14 mainly illustrates function blocks of characteristic portions according to the present embodiment, and assumes that the user terminal 20 includes other function blocks, too, that are necessary for radio communication. As illustrated in Fig. 14, the baseband signal processing section 204 of the user terminal 20 includes a control section 401, a transmission signal generation section 402, a mapping section 403, a received signal processing section 404 and a measurement section 405.

The control section 401 controls the entire user terminal 20. The control section 401 controls, for example, UL signal generation of the transmission signal generation section 402, UL signal mapping of the mapping section 403, DL signal reception processing of the received signal processing section 404, and measurement of the measurement section 405.

Furthermore, based on DCI, the control section 401 may control communication processing of the user terminal 20 (at least one of reception of a downlink shared channel (e.g., PDSCH), transmission of an uplink shared channel (e.g., PUSCH), a slot format, transmission power of at least one of the uplink shared channel and an uplink control channel (e.g., PUCCH), transmission of an uplink reference signal (e.g., SRS)). More specifically, the control section 401 may control the above communication processing in the user terminal 20 based on identifier field values of a plurality of pieces of DCI. A plurality of pieces of these DCI may have identical payloads and identical identifiers used to scramble CRC bits.

Furthermore, when a plurality of pieces of above DCI are a plurality of pieces of DCI used to schedule at least one of the downlink shared channel and the uplink shared channel, the control section 401 may identify formats of a plurality of pieces of these DCI based on a plurality of these identifier field values (first and second aspects).

Furthermore, when a plurality of pieces of above DCI are a plurality of pieces of DCI having different slot format identifier configurations, the control section 401 may identify the slot format identifier configurations based on a plurality of these identifier field values (third aspect).

Furthermore, when a plurality of pieces of above DCI are first DCI including an identifier indicating a resource in which the downlink shared channel is assumed not to be transmitted, and second DCI including an identifier indicating a resource in which transmission of the uplink shared channel is stopped, the control section 401 may identify the first DCI and the second DCI based on identifier field values of the first DCI and the second DCI (fourth aspect).

Furthermore, when a plurality of pieces of above DCI are first DCI including a command for Transmission Power Control (TPC) of the downlink shared channel, and second DCI including a command for TPC of the uplink shared channel, the control section 401 may control generation of identifier field values of the first DCI and the second DCI (fifth aspect).

Furthermore, when a plurality of pieces of above DCI are first DCI including a command for TPC of an SRS of a normal UL carrier, and second DCI including a command for TPC of an SRS of an SUL, the control section 401 may control generation of identifier field values of the first DCI and the second DCI (sixth aspect).

Furthermore, the control section 401 may control decoding (error correction) of a plurality of pieces of these DCI based on the identifier field values of a plurality of pieces of DCI (third to sixth aspects).

The control section 401 can be composed of a controller, a control circuit or a control apparatus described based on the common knowledge in the technical field according to the present invention.

The transmission signal generation section 402 generates (e.g., encodes, rate-matches, punctures or modulates) a UL signal (including a UL data signal, a UL control signal, a UL reference signal or UCI) based on an instruction from the control section 401, and outputs the UL signal to the mapping section 403. The transmission signal generation section 402 can be composed of a signal generator, a signal generating circuit or a signal generating apparatus described based on the common knowledge in the technical field according to the present invention.

The mapping section 403 maps the UL signal generated by the transmission signal generation section 402, on radio resources based on the instruction from the control section 401, and outputs the UL signal to each transmitting/receiving section 203. The mapping section 403 can be composed of a mapper, a mapping circuit or a mapping apparatus described based on the common knowledge in the technical field according to the present invention.

The received signal processing section 404 performs reception processing (e.g., demapping, demodulation and decoding) on the DL signal (the DL data signal, the scheduling information, the DL control signal or the DL reference signal). The received signal processing section 404 outputs information received from the radio base station 10 to the control section 401. The received signal processing section 404 outputs, for example, broadcast information, system information, higher layer control information of a higher layer signaling such as an RRC signaling and physical layer control information (L1/L2 control information) to the control section 401.

The received signal processing section 404 can be composed of a signal processor, a signal processing circuit or a signal processing apparatus described based on the common knowledge in the technical field according to the present invention. Furthermore, the received signal processing section 404 can compose the receiving section according to the present invention.

The measurement section 405 measures a channel state based on a reference signal (e.g., CSI-RS) from the radio base station 10, and outputs a measurement result to the control section 401. In addition, the measurement section 405 may measure the channel state per CC.

The measurement section 405 can be composed of a signal processor, a signal processing circuit or a signal processing apparatus, and a measurement instrument, a measurement circuit or a measurement apparatus described based on the common knowledge in the technical field according to the present invention.

### <Hardware Configuration>

In addition, the block diagrams used to describe the above embodiment illustrate blocks in function units. These function blocks (components) are realized by an optional combination of hardware and/or software. Furthermore, a method for realizing each function block is not limited in particular. That is, each function block may be realized by using one physically and/or logically coupled apparatus or may be realized by using a plurality of these apparatuses formed by connecting two or more physically and/or logically separate apparatuses directly and/or indirectly (by using, for example, wired connection and/or radio connection).

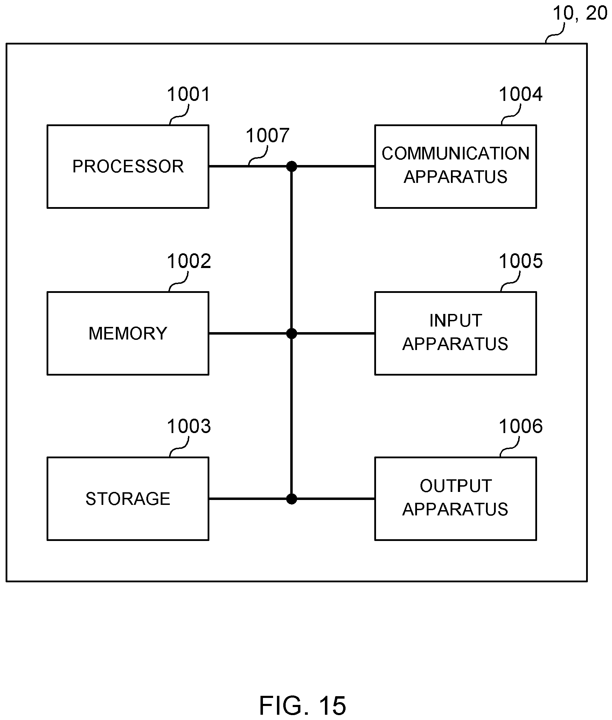

For example, the radio base station and the user terminal according to the one embodiment of the present invention may function as computers that perform processing of the radio communication method according to the present invention. Fig. 15 is a diagram illustrating one example of the hardware configurations of the radio base station and the user terminal according to the present embodiment. The above-described radio base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the radio base station 10 and the user terminal 20 may be configured to include one or a plurality of apparatuses illustrated in Fig. 15 or may be configured without including part of the apparatuses.

For example, Fig. 15 illustrates the only one processor 1001. However, there may be a plurality of processors. Furthermore, processing may be executed by 1 processor or processing may be executed by 1 or more processors concurrently or successively or by using another method. In addition, the processor 1001 may be implemented by 1 or more chips.

Each function of the radio base station 10 and the user terminal 20 is realized by, for example, causing hardware such as the processor 1001 and the memory 1002 to read given software (program), and thereby causing the processor 1001 to perform an operation, and control communication via the communication apparatus 1004 and control reading and/or writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above-described baseband signal processing section 104 (204) and call processing section 105 may be realized by the processor 1001.

Furthermore, the processor 1001 reads programs (program codes), a software module or data from the storage 1003 and/or the communication apparatus 1004 out to the memory 1002, and executes various types of processing according to these programs, software module or data. As the programs, programs that cause the computer to execute at least part of the operations described in the above-described embodiment are used. For example, the control section 401 of the user terminal 20 may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to perform the radio communication method according to the one embodiment of the present invention.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via wired and/or radio networks, and will be also referred to as, for example, a network device, a network controller, a network card and a communication module. The communication apparatus 1004 may be configured to include a high frequency switch, a duplexer, a filter and a frequency synthesizer to realize, for example, Frequency Division Duplex (FDD) and/or Time Division Duplex (TDD). For example, the above-described transmission/reception antennas 101 (201), amplifying sections 102 (202), transmitting/receiving sections 103 (203) and communication path interface 106 may be realized by the communication apparatus 1004.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the radio base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or all of each function block. For example, the processor 1001 may be implemented by using at least one of these types of hardware.

### (Modified Example)

In addition, each term that has been described in this description and/or each term that is necessary to understand this description may be replaced with terms having identical or similar meanings. For example, a channel and/or a symbol may be signals (signalings). Furthermore, a signal may be a message. A reference signal can be also abbreviated as an RS (Reference Signal), or may be also referred to as a pilot or a pilot signal depending on standards to be applied. Furthermore, a Component Carrier (CC) may be referred to as a cell, a frequency carrier and a carrier frequency.

Furthermore, a radio frame may include one or a plurality of durations (frames) in a time domain. Each of one or a plurality of durations (frames) that composes a radio frame may be referred to as a subframe. Furthermore, the subframe may include one or a plurality of slots in the time domain. The subframe may be a fixed time duration (e.g., 1 ms) that does not depend on the numerologies.

Furthermore, the slot may include one or a plurality of symbols (Orthogonal Frequency Division Multiplexing (OFDM) symbols or Single Carrier-Frequency Division Multiple Access (SC-FDMA) symbols) in the time domain. Furthermore, the slot may be a time unit based on the numerologies. Furthermore, the slot may include a plurality of mini slots. Each mini slot may include one or a plurality of symbols in the time domain. Furthermore, the mini slot may be referred to as a subslot.

The radio frame, the subframe, the slot, the mini slot and the symbol each indicate a time unit for conveying signals. The other corresponding names may be used for the radio frame, the subframe, the slot, the mini slot and the symbol. For example, 1 subframe may be referred to as a Transmission Time Interval (TTI), a plurality of contiguous subframes may be referred to as TTIs, or 1 slot or 1 mini slot may be referred to as a TTI. That is, the subframe and/or the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as a slot or a mini slot instead of a subframe.

In this regard, the TTI refers to, for example, a minimum time unit of scheduling for radio communication. For example, in the LTE system, the radio base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block and/or codeword, or may be a processing unit of scheduling or link adaptation. In addition, when the TTI is given, a time period (e.g., the number of symbols) in which a transport block, a code block and/or a codeword are actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that compose a minimum time unit of the scheduling may be controlled.

The TTI having the time duration of 1 ms may be referred to as a general TTI (TTIs according to LTE Rel. 8 to 12), a normal TTI, a long TTI, a general subframe, a normal subframe or a long subframe. A TTI shorter than the general TTI may be referred to as a reduced TTI, a short TTI, a partial or fractional TTI, a reduced subframe, a short subframe, a mini slot or a subslot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. Furthermore, the RB may include one or a plurality of symbols in the time domain or may have the length of 1 slot, 1 mini slot, 1 subframe or 1 TTI. 1 TTI or 1 subframe may each include one or a plurality of resource blocks. In this regard, one or a plurality of RBs may be referred to as a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and parameters described in this description may be expressed by using absolute values, may be expressed by using relative values with respect to given values or may be expressed by using other corresponding information. For example, a radio resource may be instructed by a given index.

Names used for parameters in this description are in no respect restrictive names. For example, various channels (the Physical Uplink Control Channel (PUCCH) and the Physical Downlink Control Channel (PDCCH)) and information elements can be identified based on various suitable names. Therefore, various names assigned to these various channels and information elements are in no respect restrictive names.

The information and the signals described in this description may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or optional combinations of these.

Furthermore, the information and the signals can be output from a higher layer to a lower layer and/or from the lower layer to the higher layer. The information and the signals may be input and output via a plurality of network nodes.

The input and output information and signals may be stored in a specific location (e.g., memory) or may be managed by using a management table. The information and signals to be input and output can be overwritten, updated or additionally written. The output information and signals may be deleted. The input information and signals may be transmitted to other apparatuses.

Notification of information is not limited to the aspects/embodiment described in this description and may be performed by using other methods. For example, the information may be notified by a physical layer signaling (e.g., Downlink Control Information (DCI) and Uplink Control Information (UCI)), a higher layer signaling (e.g., a Radio Resource Control (RRC) signaling, broadcast information (a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRC Connection Setup message or an RRC Connection Reconfiguration message. Furthermore, the MAC signaling may be notified by using, for example, an MAC Control Element (MAC CE).

Furthermore, notification of given information (e.g., notification of "being X") is not limited to explicit notification, and may be performed implicitly (by, for example, not notifying the given information or by notifying another information).

Decision may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using wired techniques (e.g., coaxial cables, optical fiber cables, twisted pairs and Digital Subscriber Lines (DSLs)) and/or radio techniques (e.g., infrared rays and microwaves), these wired techniques and/or radio techniques are included in a definition of the transmission media.

The terms "system" and "network" used in this description can be interchangeably used.

In this description, the terms "Base Station (BS)", "radio base station", "eNB", "gNB", "cell", "sector", "cell group", "carrier" and "component carrier" can be interchangeably used. The base station will be also referred to as a term such as a fixed station, a NodeB, an eNodeB (eNB), an access point, a transmission point, a reception point, a transmission/reception point, a femtocell or a small cell in some cases.

The base station can accommodate one or a plurality of (e.g., three) cells (also referred to as sectors). When the base station accommodates a plurality of cells, an entire coverage area of the base station can be partitioned into a plurality of smaller areas. Each smaller area can also provide communication service via a base station subsystem (e.g., indoor small base station (RRH: Remote Radio Head)). The term "cell" or "sector" indicates part or the entirety of the coverage area of the base station and/or the base station subsystem that provide communication service in this coverage.

In this description, the terms "Mobile Station (MS)", "user terminal", "User Equipment (UE)" and "terminal" can be interchangeably used.

The mobile station will be also referred to by a person skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

The base station and/or the mobile station may be referred to as a transmission apparatus or a reception apparatus.

Furthermore, the radio base station in this description may be read as the user terminal. For example, each aspect/embodiment of the present invention may be applied to a configuration where communication between the radio base station and the user terminal is replaced with communication between a plurality of user terminals (D2D: Device-to-Device). In this case, the user terminal 20 may be configured to include the functions of the above-described radio base station 10. Furthermore, words such as "uplink" and "downlink" may be read as a "side". For example, the uplink channel may be read as a side channel.

Similarly, the user terminal in this description may be read as the radio base station. In this case, the radio base station 10 may be configured to include the functions of the above-described user terminal 20.

In this description, operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MMEs) or Serving-Gateways (S-GWs) yet are not limited to these) other than the base stations or a combination of these.

Each aspect/embodiment described in this description may be used alone, may be used in combination or may be switched and used when carried out. Furthermore, orders of the processing procedures, the sequences and the flowchart according to each aspect/embodiment described in this description may be rearranged unless contradictions arise. For example, the method described in this description presents various step elements in an exemplary order and is not limited to the presented specific order.

Each aspect/embodiment described in this description may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods and/or next-generation systems that are expanded based on these systems.

The phrase "based on" used in this description does not mean "based only on" unless specified otherwise. In other words, the phrase "based on" means both of "based only on" and "based at least on".

Every reference to elements that use names such as "first" and "second" used in this description does not generally limit the quantity or the order of these elements. These names can be used in this description as a convenient method for distinguishing between two or more elements. Hence, the reference to the first and second elements does not mean that only two elements can be employed or the first element should precede the second element in some way.

The term "deciding (determining)" used in this description includes diverse operations in some cases. For example, "deciding (determining)" may be regarded to "decide (determine)" calculating, computing, processing, deriving, investigating, looking up (e.g., looking up in a table, a database or another data structure) and ascertaining. Furthermore, "deciding (determining)" may be regarded to "decide (determine)" receiving (e.g., receiving information), transmitting (e.g., transmitting information), input, output and accessing (e.g., accessing data in a memory). Furthermore, "deciding (determining)" may be regarded to "decide (determine)" resolving, selecting, choosing, establishing and comparing. That is, "deciding (determining)" may be regarded to "decide (determine)" some operation.

The words "connected" and "coupled" used in this description or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of the physical and logical connections. For example, "connection" may be read as "access".

It can be understood in this description that, when connected, the two elements are "connected" or "coupled" with each other by using 1 or more electric wires, cables and/or printed electrical connection, and by using electromagnetic energy having wavelengths in radio frequency domains, microwave domains and/or (both of visible and invisible) light domains in some non-restrictive and non-comprehensive examples.

A sentence that "A and B are different" in this description may mean that "A and B are different from each other". Words such as "separate" and "coupled" may be also interpreted in a similar manner.

When the words "including" and "comprising" and modifications of these words are used in this description or the claims, these words intend to be inclusive similar to the word "having". Furthermore, the word "or" used in this description or the claims intends not to be an exclusive OR.

The present invention has been described in detail above. However, it is obvious for a person skilled in the art that the present invention is not limited to the embodiment described in this description. The present invention can be carried out as modified and changed aspects without departing from the scope of the present invention defined based on the recitation of the claims. Accordingly, the disclosure of this description is intended for exemplary explanation, and does not bring any restrictive meaning to the present invention. The intended limitations are defined by the attached claims.

## Claims

1. A terminal (20) comprising:
a receiving section (203) configured to receive information indicating a Radio Network Temporary Identifier, RNTI; and
a control section (401) configured to monitor a given search space corresponding to downlink control information, DCI, format 2_2 or DCI format 2_3 that has cyclic redundancy check, CRC, bits scrambled by the RNTI and is appended with a bit of fixed value until a size of the DCI format 2_2 or DCI format 2_3 equals to a size of DCI format 1_0;
wherein the RNT! is different from a RNTI that is used for scrambling CRC bits of the DCI format 1_0.

2. The terminal (20) according to claim 1, wherein the DCI format 1_0 includes an identifier for distinguishing from DCI format 0_0.

3. The terminal (20) according to claim 1 or 2, wherein the fixed value is zero.

4. The terminal (20) according to any one of claims 1 to 3, wherein
the DCI format 1_0 is used for scheduling a downlink shared channel,
the DCI format 2_2 is used for transmitting a transmission power control, TPC, command for an uplink shared channel or an uplink control channel, and
the DCI format 2_3 is used for transmitting a sounding reference signal, SRS, by one or more terminals.

5. A radio communication method for a terminal (20), comprising:
receiving information indicating a Radio Network Temporary Identifier, RNTI; and
monitoring a given search space in accordance with downlink control information, DCI, format 2_2 or DCI format 2_3 that has cyclic redundancy check, CRC, bits scrambled by the RNTI and is appended with a bit of fixed value until a size of the DCI format 2_2 or DCI format 2_3 equals to a size of DCI format 1_0;
wherein the RNT! is different from a RNTI that is used for scrambling CRC bits of the DCI format 1_0.

6. A base station (10), comprising:
a transmitting section (103) configured to transmit information indicating a Radio Network Temporary Identifier, RNTI; and
a control section (301) configured to configure a given search space corresponding to downlink control information, DCI, format 2_2 or DCI format 2_3 that has cyclic redundancy check, CRC, bits scrambled by the RNTI and is appended with a bit of fixed value until a size of the DCI format 2_2 or DCI format 2_3 equals to a size of DCI format 1_0;
wherein the RNT! is different from a RNTI that is used for scrambling CRC bits of the DCI format 1_0.

7. A system comprising a terminal (20) according to claim 1 and a base station (10) according to claim 6.

## Patentansprüche

1. Endgerät (20), umfassend:
einen Empfangsabschnitt (203), der konfiguriert ist, um Informationen zu empfangen, die eine Funknetzwerk-Temporärkennung, RNTI, anzeigen; und
einen Steuerungsabschnitt (401), der konfiguriert ist, um einen gegebenen Suchraum zu überwachen, der Downlink-Steuerungsinformationen, DCI, Format 2_2 oder DCI Format 2_3 entspricht, die zyklische Redundanzprüfungsbits, CRC, aufweisen, die durch die RNTI verwürfelt sind und mit einem Bit mit festem Wert angehängt sind, bis eine Größe des DCI Formats 2_2 oder DCI Formats 2_3 gleich einer Größe des DCI Formats 1_0 ist;
wobei sich die RNTI von einer RNTI unterscheidet, die zum Verwürfeln von CRC-Bits des DCI Formats 1_0 verwendet wird.

2. Endgerät (20) nach Anspruch 1, wobei das DCI Format 1_0 eine Kennung zur Unterscheidung vom DCI Format 0_0 einschließt.

3. Endgerät (20) nach Anspruch 1 oder 2, wobei der feste Wert Null ist.

4. Endgerät (20) nach einem der Ansprüche 1 bis 3, wobei
das DCI Format 1_0 zum Planen eines gemeinsam genutzten Downlink-Kanals verwendet wird,
das DCI Format 2_2 zum Übertragen eines Sendeleistungssteuerungs-, TPC, - befehls für einen gemeinsam genutzten Uplink-Kanal oder einen Uplink-Steuerkanal verwendet wird, und
das DCI Format 2_3 zum Übertragen eines Sondierungsreferenzsignals, SRS, durch ein oder mehrere Endgeräte verwendet wird.

5. Funkkommunikationsverfahren für ein Endgerät (20), umfassend:
Empfangen von Informationen, die eine Funknetzwerk-Temporärkennung, RNTI, anzeigen; und
Überwachen eines gegebenen Suchraums in Übereinstimmung mit Downlink-Steuerungsinformationen, DCI, Format 2_2 oder DCI Format 2_3, die zyklische Redundanzprüfungsbits, CRC, aufweisen, die durch die RNTI verwürfelt sind und mit einem Bit mit festem Wert angehängt sind, bis eine Größe des DCI Formats 2_2 oder DCI Formats 2_3 gleich einer Größe des DCI Formats 1_0 ist;
wobei sich die RNTI von einer RNTI unterscheidet, die zum Verwürfeln von CRC-Bits des DCI Formats 1_0 verwendet wird.

6. Basisstation (10), umfassend:
einen Übertragungsabschnitt (103), der konfiguriert ist, um Informationen zu übertragen, die eine Funknetzwerk-Temporärkennung, RNTI, anzeigen; und
einen Steuerungsabschnitt (301), der konfiguriert ist, um einen gegebenen Suchraum zu konfigurieren, der Downlink-Steuerungsinformationen, DCI, Format 2_2 oder DCI Format 2_3 entspricht, die zyklische Redundanzprüfungsbits, CRC, aufweisen, die durch die RNTI verwürfelt sind und mit einem Bit mit festem Wert angehängt sind, bis eine Größe des DCI Formats 2_2 oder DCI Formats 2_3 gleich einer Größe des DCI Formats 1_0 ist;
wobei sich die RNTI von einer RNTI unterscheidet, die zum Verwürfeln von CRC-Bits des DCI Formats 1_0 verwendet wird.

7. System umfassend ein Endgerät (20) nach Anspruch 1 und eine Basisstation (10) nach Anspruch 6.

## Revendications

1. Terminal (20) comprenant :
une section de réception (203) configurée de manière à recevoir des informations indiquant un identifiant temporaire de réseau radio, RNTI ; et
une section de commande (401) configurée de manière à surveiller un espace de recherche donné qui correspond à des informations de commande de liaison descendante, DCI, au format DCI 2_2 ou format DCI 2_3 qui présentent des bits de contrôle de redondance cyclique, CRC, brouillés par le RNTI et sont annexées à un bit de valeur fixe jusqu'à ce qu'une taille du format DCI 2_2 ou du format DCI 2_3 soit égale à une taille du format DCI 1_0 ;
dans lequel le RNTI est différent d'un RNTI qui est utilisé pour brouiller des bits CRC du format DCI 1_0.

2. Terminal (20) selon la revendication 1, dans lequel le format DCI 1_0 inclut un identifiant qui permet de distinguer celui-ci du format DCI 0_0.

3. Terminal (20) selon la revendication 1 ou la revendication 2, dans lequel la valeur fixe est zéro.

4. Terminal (20) selon l'une quelconque des revendications 1 à 3, dans lequel
le format DCI 1_0 est utilisé pour programmer un canal partagé de liaison descendante,
le format DCI 2_2 est utilisé pour transmettre une commande de contrôle de puissance de transmission, TPC, pour un canal partagé de liaison montante ou un canal de commande de liaison montante, et
le format DCI 2_3 est utilisé pour transmettre un signal de référence de sondage (SRS) par un terminal ou plusieurs terminaux.

5. Procédé de communication radio pour un terminal (20), comprenant :
la réception d'informations indiquant un identifiant temporaire de réseau radio, RNTI ;
et
la surveillance d'un espace de recherche donné conformément à des informations de commande de liaison descendante, DCI, au format DCI 2_2 ou au format DCI 2_3 qui présentent des bits de contrôle de redondance cyclique, CRC, brouillés par le RNTI et sont annexées à un bit de valeur fixe jusqu'à ce qu'une taille du format DCI 2_2 ou du format DCI 2_3 soit égale à une taille du format DCI 1_0 ;
dans lequel le RNTI est différent d'un RNTI qui est utilisé pour brouiller des bits CRC du format DCI 1_0.

6. Station de base (10), comprenant :
une section de transmission (103) configurée de manière à transmettre des informations qui indiquent un identifiant temporaire de réseau radio, RNTI ; et
une section de commande (301) configurée de manière à configurer un espace de recherche donné qui correspond à des informations de commande de liaison descendante, DCI, au format DCI 2_2 ou au format DCI 2_3 qui présentent des bits de contrôle de redondance cyclique, CRC, brouillés par le RNTI et sont annexées à un bit de valeur fixe jusqu'à ce qu'une taille du format DCI 2_2 ou du format DCI 2_3 soit égale à une taille du format DCI 1_0 ;
dans lequel le RNTI est différent d'un RNTI qui est utilisé pour brouiller des bits CRC du format DCI 1_0.

7. Système (1) comprenant un terminal (20) selon la revendication 1 et une station de base (10) selon la revendication 6.
